(19) Europäisches Patentamt
European Patent Office
Office européen des brevets

(11) Publication number: **0 415 796 A2**

(12) **EUROPEAN PATENT APPLICATION**

(21) Application number: **90309578.4**

(51) Int. Cl.5: **G06F 3/023**

(22) Date of filing: **31.08.90**

(30) Priority: **31.08.89 US 401600**

(43) Date of publication of application: **06.03.91 Bulletin 91/10**

(84) Designated Contracting States: **DE FR GB**

(71) Applicant: **XEROX CORPORATION**
**Xerox Square**
**Rochester New York 14644(US)**

(72) Inventor: **Pajak, Henry G.**
**5612 Lincoln Road**
**Ontario, New York 14519(US)**
Inventor: **Marder, Daniel S.**
**33 Pond Valley Circle**
**Penfield, New York 14526(US)**
Inventor: **Anstey, Susan L.**
**34 Ericsson Street**
**Rochester, New York 14610(US)**
Inventor: **Stumbo, William K.**
**17 Bent Oak Trail**
**Fairport, New York 14450(US)**
Inventor: **Byrne, Kenneth C.**
**114 Green Clover Drive**
**Henrietta, New York 14467(US)**

(74) Representative: **Goode, Ian Roy et al**
**Rank Xerox Patent Department Albion House, 55 New Oxford Street**
**London WC1A 1BS(GB)**

# (54) Graphics user interface.

(57) A method of creating graphic objects on an electronic workstation device having a keyboard and display screen provided with headers, the work station device being provided with a plurality of graphic commands, comprising the steps of packaging the graphic commands on the workstation device screen in a graphic menu in a window header, displaying the graphic commands resulting from the selection of the graphic menu, providing the graphic commands with both graphics and text to illustrate the meaning of the graphic commands, providing a retrievable attachment data base including a displayable property sheet associated with a graphic object, and activating the graphic commands to provide a plurality of graphic objects on the display screen.

EP 0 415 796 A2

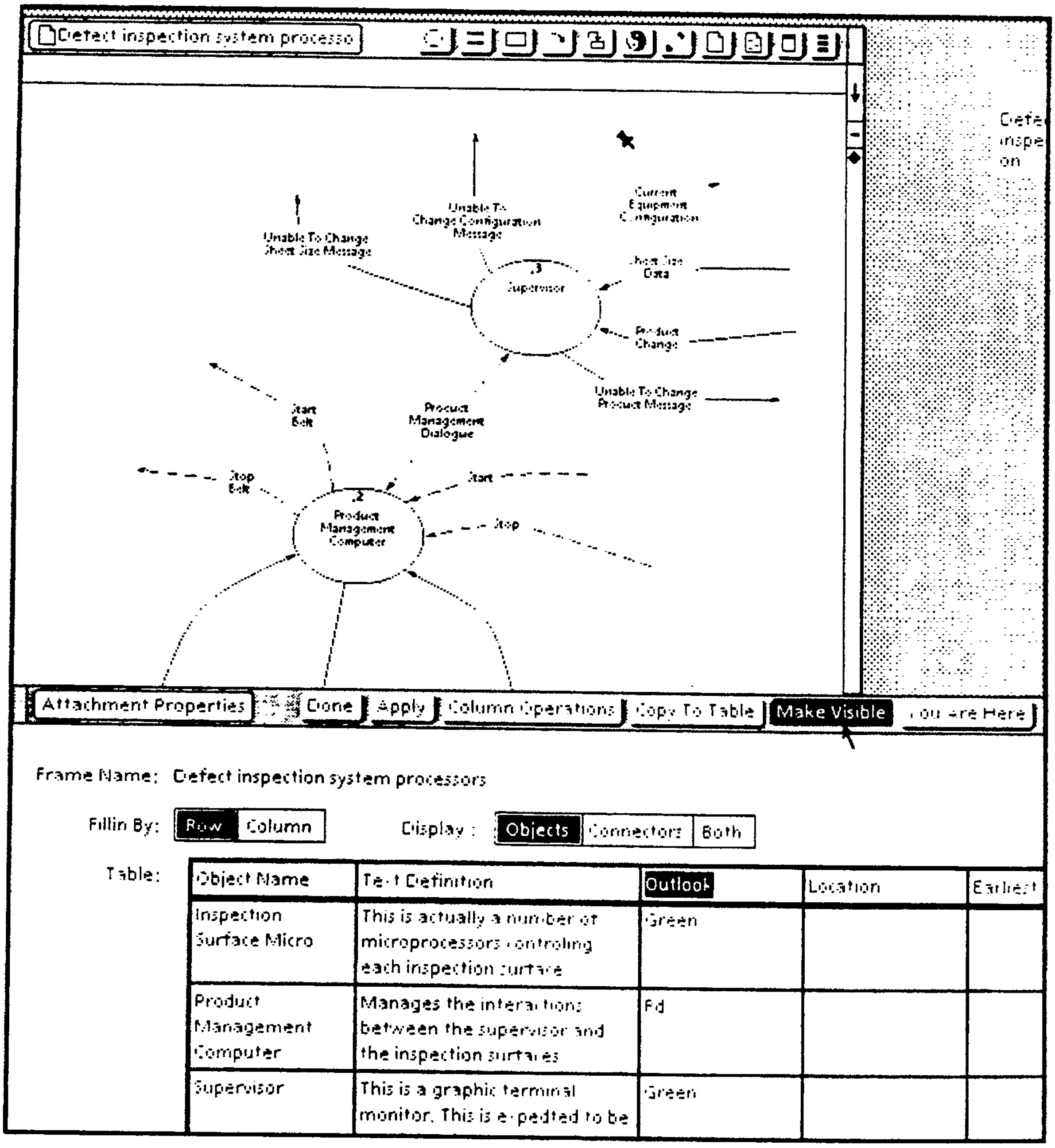
Defect inspection system processo
Unable To Change Sheet Size Message
Unable To Change Configuration Message
Current Equipment Configuration
Supervisor
Sheet Size Data
Product Change
Unable To Change Product Message
Start Belt
Product Management Dialogue
Stop Belt
Start
Product Management Computer
Stop
Attachment Properties
Done
Apply
Column Operations
Copy To Table
Make Visible
You Are Here
Frame Name: Defect inspection system processors
Fillin By: Row Column
Display: Objects Connectors Both
Table:
Object Name
Text Definition
Outlook
Location
Earliest
Inspection Surface Micro
This is actually a number of microprocessors controling each inspection surface
Green
Product Management Computer
Manages the interactions between the supervisor and the inspection surfaces
Red
Supervisor
This is a graphic terminal monitor. This is expected to be
Green

FIG. 34

# GRAPHICS USER INTERFACE

The invention generally relates to computer workstation/user interfaces and, more particularly, to a method of creating graphics, and in particular, in providing simple and convenient techniques for constructing structured graphic objects that include data attachments and relationships with other graphic objects.

The increasing proliferation and utility of professional workstations and personal computers has required the design of user-friendly computer and workstation interfaces. In the prior art US-A-4,649,499 to Sutton et al. discloses a "user friendly" computer interface which allows a user to access information in an image of a rotary card file on a computer screen. A program called "Personal Card File" (PCF) emulates a rotary card file complete with "tabs" for selecting "cards" to be represented individually on a touch screen. Each "tab" is symbolic of a different file which may be accessed. The "tab" contains a label and is associated with a "card" which contains stored information. When an operator touches a tab, the information on the associated card is displayed. Further, a series of soft keys are predefined by the PCF program allowing the operator to issue instructions by touching the soft keys. For instance, the operator may initiate the addition of new "cards" by merely touching one or more of the soft keys.

US-A-4,506,326 to Shaw et al. discloses an apparatus and method for synthesizing a query for accessing a relational data base. Specifically, a method is provided for operating a computing apparatus to translate a graphic language query input, at a user terminal, into a linear query (e.g. SQL). The graphic language query is expressed as one or more language elements appearing in rows and columns of an example table. The statements which comprise the linear query are automatically generated from the graphic query input at the user terminal.

US-A-4,358,824 to Glickman et al. discloses a system for document storage and retrieval comprising a set of programs for controlling document abstracting and archiving. A document is retrieved from storage in response to an input query of terms descriptive of the content of the document. The query text statement is input from a source, which may be any of various input devices, such as a keyboard, script table or specially constituted touchtone pad (see column 3, lines 18-25).

There are also commercially available systems (e.g., the Apple MacIntosh) in which icons are used to represent and access files in the system. In addition, US-A-4,813,013 and US-A-4,656,603 to Dunn disclose user friendly interface systems for creating schematic diagrams. The systems provide means for creating a library of schematic symbols, or graphic icons, and related functions which govern the manipulation of the icons when used to create diagrams. Further, as described in col. 3, lines 19-35 of the '013 patent, a user may create new graphic icons and new formal functions which can be represented either in text format or symbolically as function icons. The new functions may be built by concatenating function primitives to other existing function primitives or to existing complex functions, or by creating value tables which assign values to all non-terminated inputs and outputs of a function icon. The system also includes a mode in which graphic symbols used in creating a drawing comprise text fields describing the symbol (see col. 13, line 55-col. 14, line 4 of the '313 patent).

US-A-4,811,240 to Ballou et al. discloses a menu based graphic development system for designing graphics displays used in vehicles. The menu based system utilizes a set of tables which point to and describe graphic elements and animation sequences, and which fully define all elements used to compose a display screen (see col. 12, lines 49-52). The table based system allows display screen designs to be changed without requiring corresponding changes in the program that controls the display of screens.

US-A-4,800,510 to Vinberg et al. discloses a user friendly system for producing a graphics layout which allows a user to interact with the system through function menus as well as representations of the user's selection of menu items and parameter values. In operation, the user enters values for graph design control parameters which completely characterize the layout of the graph to be produced (see col. 6, lines 37-42). Look-up tables of the design control parameter values are maintained which allow the system to create a graph layout based on the entered parameter values (see col. 7, line 10 et. seq.)

US-A-4,663,616 to Himelstein discloses a technique for creating attachments to computer graphics wherein a graphic object may be attached to an existing graphic object and the attached object will move with the existing object in a graphical display.

A structured data object generally means a data object that contains a series of other data objects linked together in a predetermined manner that may or may not include a visual representation or functional abstraction on a display screen. Such data objects may have an associated set of operations and be linked to one another for one or more functional purposes. An example of a structured data object is the electronic versions of a work space or desktop as defined by the display screen. A typical screen display contains multiple structured data objects, such as file folders or documents represented on the screen as icons, in turn containing other structured data objects. For example, a file folder may contain several documents, other file folders or a file drawer. A structured data object that is capable of holding other structured data objects is also referred to in the art as a "container", that is, a file folder is a container for documents. An example of a container is the file folder of the MacIntosh Computer of Apple Computer, Inc. that may contain a plurality of other file folders displayed in their ionic representation of individual folders.

As is known in the art, the representation and display of structured data objects in a workstation environment may take various forms. A common technique is to present the contents or entries of structured data objects in a display region or work space, such as a view window, on a CRT display. In order to maintain an unclustered display area in the displayed setting, it may be useful to provide a shrunken or miniature representation of the structured data object, such as an icon, when a user is not engaging in activities relating to the structured data object. Such a representation of data may take the form of conic representations of different structured data objects positioned on a work space of a display screen, that is, a display illustrating an office desktop metaphor employing various abstractions of a typical office environment. The desktop metaphor represents real office objects that are accessible directly while seated at a desk or only accessible by moving from a desk to another office location away from the desk. Examples of these abstractions are a desktop, inbasket, outbasket, documents, file folders and "books", which contains two or more consecutive document portions which together comprise a complete document. An example of such an office metaphor is the ViewPoint™ ("VP") software system available from Xerox Corporation in connection with its 8010 and 8065 display workstations.

A difficulty with the prior art workstations and interfaces for graphics creation is often the lack of versatility in creating graphics that are associated with both project scheduling and management as well as with such things as computer aided software engineering. Also, there is often the inability to provide and manipulate data attachments that support the graphic models or objects created.

It is an object of the present invention, therefore, to provide a new and improved technique for creating various graphic objects such as Organization Charts, PERT / CPM Charts, Entity Relationship Charts, Data Flow Diagrams, and Structure Charts and to provide data attachments for such graphic objects.

According to the present invention, there is provided a method of creating graphic objects on the display screen of an electronic workstation device having a keyboard and a display screen, the work station device being provided with a plurality of commands, comprising the steps of:
providing the commands on the workstation device screen in a graphic menu,
displaying the commands resulting from the selection of the graphic menu,
providing the commands with both graphics and text to illustrate the meaning of the commands, and
activating the commands to provide a plurality of graphic objects on the display screen.

According to another aspect, there is provided a method of creating graphics in an electronic workstation device having a keyboard, a pointer, and a display screen desktop, comprising the steps of:
creating graphic model selections on a portion of the display,
selecting a properties function to set graphic properties of said model selections,
representing a plurality of associated objects for one of said model selection, and
selecting a sequence of said associated objects in order to produce a graphic model.

In another aspect, the invention provides a method of creating graphic images on the display screen of an electronic workstation device having a keyboard and display screen, the work station device being provided with a plurality of graphic selectors, the graphic selectors including a combination of graphic and text, comprising the steps of:
designating at the workstation a particular one of the plurality of graphic selectors,
creating a graphics frame on the screen to construct the graphics images,
displaying a set of objects and menus related to the designated one of the graphic selectors, the menus including a combination of text and graphics,
selecting the desired object from the set of objects, and
positioning the desired object within the frame.

In a further aspect, the invention provides a method of changing frame properties on a display screen of an electronic workstation device having a keyboard, a pointer, and a display screen with frames including headers and having given properties for creating graphic displays, comprising the steps of:
identifying a frame, the frame having a first set of properties including graphic objects to be drawn within the frame,
selecting a properties function to provide said frame with a second set of properties including graphic objects to be drawn within the frame, and automatically changing the menus related to the frame whereby the frame is provided with said second set of properties.

The invention also provides in a electronic workstation device having a keyboard, a pointing device, and a display screen with windows having headers, the work station device being provided with a plurality of graphic selectors, a method of creating graphic images on the display screen comprising the steps of:

designating at the workstation a particular one of the plurality of graphic selectors,

creating a graphics frame on the screen to construct the graphics images,

displaying a set of objects and related menus related to the designated one of the graphic selectors, the menus including combinations of graphics and text,

selecting the desired object from the set of objects,

positioning the desired object within the frame,

positioning additional objects within the frame, selecting a function icon related to the objects, and applying the function icon to said objects within the frame, and

modifying an object within the frame including the steps of identifying the object to be modified and selecting the appropriate modification for the identified object

In accordance with another aspect, the present invention is a method of creating graphic objects on an electronic workstation device having a keyboard, pointing device and display screen provided with headers wherein the work station device is provided with a plurality of graphic commands, comprising the steps of packaging the graphic commands on the workstation device screen in a graphic menu in a window header, displaying the graphic commands resulting from the selection of the graphic menu, providing the graphic commands with both graphics and text to illustrate the meaning of the graphic commands, providing a retrievable attachment data base including a displayable property sheet associated with a graphic object, and activating the graphic commands to provide a plurality of graphic objects on the display screen.

The invention provides graphic commands, such as icons, packaged in window headers and also provides pull down menu commands, resulting from the selection of an icon menu, that are composed of both graphics and text to further illustrate the meaning of the graphics command.

Methods in accordance with the invention will now be described, by way of example, with reference to the accompanying drawings wherein the same reference numerals have been applied to like parts and wherein:

Figure 1 is an illustration of a typical office information system incorporating the present invention:

Figure 2 is an enlarged view of the display screen of Figure. 1;

Figure 3 illustrates available graphic notations on the display screen;

Figures 4, 5, 6, 7 and 8 illustrate various graphic tools available

Figure 9 is a representation of drawing objects;

Figures 10, 11 and 12 are a representation of the accessing and displaying of various charts;

Figures 13 and 14 illustrate the modification of objects;

Figure 15 illustrate Finding and Opening a Graphic Symbols Folder;

Figure 16 illustrates modifying text in objects;

Figure 17 illustrates reloading new graphic symbols;

Figure 18 illustrates modifying selected objects;

Figures 19, 20 and 21 illustrate attachment properties sheets;

Figures 22 and 23 illustrate column operations;

Figures 24 and 25 are an illustration of editing the column order sheet;

Figures 26 and 27 are a representation of the changed positions of columns in property sheets;

Figures 28 is an assigning of a name and type to a new column;

Figure 29 is an example of deleting a column;

Figures 30 and 31 are an example of describing columns and copying columns to a table;

Figure 32 is an example of copying attachment contents to a table;

Figure 33 illustrates a completed table;

Figure 34 is an example of selecting "Make Visible";

Figure 35 is an example of positioning an attachment;

Figure 36 illustrates "You are Here" from table to graphic object; and

Figure 37 illustrates "You are here" from graphic object to table.

Reference is now made to a typical office information system 10 illustrated in Figures 1 and 2. System 10 includes an Ethernet local area network (LAN) 12, to which a number of user workstations 14, including workstation 14A is connected. Workstations 14 may be, for example, the Xerox 6085 professional workstation. Lan 12 may also have other office connected equipment such as network file server 16, network file/mail/communication server 18, printer server 20 and printer 22. Also, a large capacity remote storage facility, such as UNIX mini computer 24 may be connected to Lan 12. System 10 is a collaborative type system, meaning that it enables users at different workstations 14 to work together in real-time by processing and passing information among one another and storing and retrieving information from storage services 16 and 24 via network 12. The collaborative functions of system 10 could also be centralized in a single main CPU, could be distributed among processors at the workstations, or could be provided in any combination of centralization and distribution. Similarly, Lan 12 could take any appropriate configuration capable of providing the necessary communications to support collaboration.

System 10 includes display-based user interfaces, with each workstation 14 including a display device and a user input device. In this connection, workstation 14A includes a CRT display screen 26 and keyboard 25 with a display cursor mouse 30. Mouse 30 may be, for example, an optical mouse of the type disclosed in US-A-4,521 ,772. Mouse 30 has two buttons or microswitches 31A and 31 B which are respectively referred to as the left button and the right button. As is common with mouse 30, the movement of the mouse housing on a surface causes display cursor 42 visually move on screen 26 in the same direction of mouse housing movement. Point button 31A when pressed and released, is used to indicate an object on screen 26 or to an item within an object on screen 26 in the same direction of mouse housing movement. Point button 31A, when pressed and released, is used to indicate an object on screen 26 or to an item within an object on screen 26. This point function is referred to as "clicking" the mouse button 31A or 31B. Button 31B is often used in combination with left button 31A. For example, in selection of text, the left button 31A is a reference pointer to the beginning place of text to be selected and right button 31B is a second pointer to the end place of text encompassed by the combination of these two selections.

System 10 includes an object oriented display system that comprises icon representations of different structured data objects positioned on a work space of a display screen, e.g., a display illustrating an office desktop metaphor employing various abstractions of a typical office environment, representative of real office objects. An example of such an office metaphor is the ViewPoint™ ("VP") software system available from Xerox Corporation in connection with its 8010 and 8065 display workstations. Examples of these abstractions in Fig. 1 are a desktop 32, inbasket 33, outbasket 34, documents 35 and 35A, file folder 36, file drawer 37 and printer 38. Document icon 35A is shown "opened", in that an <OPEN> command has been invoked and opened window 35B has appeared displaying the document in full scale. Printer 38 is an ionic representation of printer 22 on Lan 12. Any document 35 moved, via a <COPY> command from keyboard 25 onto printer icon 37 will be printed at printer 22. Electronic mail is received and sent via a workstation inbasket 33 and outbasket 34, respectively, from and to other workstations on LAN 12 or to workstations on other networks via File/Mail/Com server 18.

Message area 40 is the header at the top of screen 26 for displaying system messages to a workstation user. In the example shown there is an indication of the number of free pages left on an associated disk drive. Other messages would be prompts to suggest the next action to be taken by a user such as involving a <MOVE> command from moving an object to another place on screen 26 and display of the message in header 40, "Please specify a destination". The triple bar symbol 41 at the end of header 40 is a transient or pop-up menu activated via mouse pointer button 31A held in its down position, thereby visually producing a menu which contains a list of command items which may be, for example, such items as "Date and Time", "End Session" (logoff), "Spelling Checker", etc.. These subcommands are involved by moving the cursor pointer with button 31A still held in its down position over a selected item, which is then highlighted to indicate to the user Its potential selection. At this point, if button 31 is released by the user, the selection is accomplished, the pop-up menu visually disappears and the command item selected is initiated.

Other commands for performing functions may be invoked from keyboard 29. These functions include <DELETE>, which will delete the object and its contents, <COPY> which will copy the object and its contents to another desktop location, <MOVE> which will move the object and its contents to another desktop location, <PROP'S> which will open a window displaying properties or parameters for a particular object and provide alternative choices for these parameters and <OPEN> which opens an object to reveal the contents of the object in a window, if the object is designated to have a content, for example, a document content.

The icons on desktop 32 are aligned vertically and horizontally according to an invisible orthogonal grid. Thus, the icon placement on desktop 32 is not arbitrary and the application software is capable of determining and keeping track of the location of icons on the surface of desktop 32. The locations of each square in the desktop grid are listed in the desktop software so that at any given time, the desktop application can determine the X, Y location of icons on its surface and also help to determine whether the positioning of one icon on top of another on the desktop is a permissible function. For example, the dropping or releasing of a document icon onto a file folder icon or on a printer icon, are both permissible functions; the dropping of one document icon onto another document icon is not a permissible function.

Many of the icons may be opened via the <OPEN> function to reveal their content, such as a list or directory of files or the content of a document. In this sense, the icons are containers representing pointers to files and other bodies of stored data. Icon 44 is a directory divider which when opened contains a plurality of directory icons, one of which is icon 46. Directory icon 46 serves as a source of icons representing shared and remote objects that the user may access, such as filing and printing services.

Icon 48 is a Blank Mail Note. This icon may be copied or moved or opened, and a message typed in the open window of the icon and the icon closed after message typing. Mail icon 48 may then be moved to outbasket icon 34 where it is electronically sent to an addressee of the note. Icon 36 is a file folder into which document icons 35, 35A and mail note icon 48 may be placed. Opening of folder icon 36 will reveal a directory listing objects contained in the folder either by alphabetical order or chronologically by revision date, any one of which may be opened in the folder or moved from the folder and placed on desktop 32.

Icon 34 as mentioned, is an outbasket for electronic mail messages while icon 33 is an inbasket for receiving incoming electronic messages, such as mail note icon 48. Inbasket icon 33 displays a mail flag 50 indicating that there is mail to be retrieved by the addressee named on the inbasket. Icon 33 may be opened to reveal a mail window through which mail notes 48 may be accessed and opened or may be moved to the desktop and opened for reading.

Icon 37 is a file drawer for storing data icons and may be opened revealing a directory displaying the titles of documents or folders they contain, which may then be individually opened or removed or copied from the file drawer. Icon 38 is a representation of printing resource. The actual printing device may be directly connected as printer 22 or may be remotely located. Document icons 35, 35A, mail note icon 48 or folder icon 36 may be moved or copied and dropped onto printer icon 38 and their content printed.

Wastebasket icon 52 is a container into which, for example, mail notes, documents or folders may be dumped for disposal but are retrievable since they are still in the container. The metaphor is that the workstation user changes his/her mind about destroying (deleting) a document or the like and removes the document from the wastebasket by opening icon 52 and moving the document icon back onto desktop 32. The contents of the wastebasket are permanently removed by a positive delete command.

Icon 54 is a freehand drawing program comprising a canvas which the user may copy graphics into or use palette tools to produce free hand drawings. Icon 56 is the User profile for desktop 32 which contains a listing of various ViewPoint applications present and supporting the desktop. Various parameters of these applications may be edited upon opening the user profile icon to change, for example, the location of window structures.

Icon 58 represents a program or application loader into which a program may be loaded and run on desktop 32. For example, mail program icon 60 comprising a mail access environment may be moved or positioned onto loader icon 58 to load a ViewPoint application in the runtime. For a more detailed description of this system, reference is made to U.S. Patent Application Serial No. 856,525, filed April 28, 1986 and assigned to the same designee as the present invention.

The Graphics features in accordance with the present invention allow the creation of graphics that are associated with both project management and scheduling as well as computer aided software engineering applications. These consist of the following drawing notations: Organization Charts, PERT / CPM Charts, Entity Relationship Charts, Data Flcw Diagrams, and Structure Charts. These features also make it possible to create and manipulate data attachments that support the graphic models created.

Drawing is generally done within frames found in "Special Keyboard". To create any one of these frames manually, start with an opened document. Point (click) with the mouse into the document where the frame is to be created. The "Special" keyboard is selected and <J>, <K>, <L>, <M>, <,>, or the <.> key is entered to provide the frame that is needed. Note that with the "Special" keyboard and "Show" selected, the property sheet is displayed as shown in Figure 3.

The following procedures illustrate the method for obtaining each of the frames, displaying the objects that are available in the menu of each frame, showing the variety of those objects available within each menu selection, and pulling down the desired object into the frame where it is to be drawn. These procedures are followed by a series of illustrated drawing processes for each type of drawing or chart. These graphics support any management documentation requirements.

For obtaining the Organization Chart frame and the Drawing Menus, first select the Special keyboard, then press the "K" key. (The frame will be inserted into the document). To display the objects that are available in the menu at the top of the page, select within the Organization Chart frame. Objects and Connectors that can be drawn with this notation will appear. Finally, select the desired object in the menu and pull down to display the menu options, as shown in Figure 4.

For obtaining the PERT Chart frame and Drawing Menus, it is necessary to select the Special keyboard, then press the "L" key. (The frame will be inserted into the document). To display the objects that are available in the menu at the top of the page, select within the PERT Chart frame and the objects that can be drawn with this notation will appear. Then, select the desired object in the menu and pull down to display the menu options as shown in Figure 5.

For obtaining the Entity Relationship Drawing frame and Drawing Menus, a similar procedure is followed and illustrated in Figures 6, 7 and 8. Note that there are alternate Frame Notation Selection Methods. For example, the procedure could be to select any SVP Frame and the whole frame will highlight. Then, press "PROP'S", choose the Notation desired, and select "Done" to Change, "Cancel" to Cancel.

After locating the frame and the various objects that can be drawn directly, The next step is draw these objects and connect them together. Note that by repeated "clicking" of the mouse in the chart frame, a series of the same object can be created without the need to return to the menu at the top of the page for each object.

The following description is presented using an Organization Chart frame. However, the procedures relate equally to performing similar steps in other Graphics frames. Note that for ease in aligning the graphics elements to be drawn within the frame, reference can be made to a "Using the Pro Illustrator" section. The grid as well as other Pro Illustrator capabilities can be displayed by selecting within the frame and then pulling down the General Drawing tool from the menu at the top of the page (the one shaped like a pencil) and then selecting "Toggle Illustrator Soft Keys On/Off". There are a large selection of options to choose from. There is one special note in regard to "Grid" Options. In general, turn Grid "Off" for drawing objects that are conics e.g. circles and ellipses and turn Grid "On" for rectangular objects. The Grid can be made visible or invisible during drawing activities.

There are also several choices for grid sizes to meet various needs. Point to a location in the frame, "Pull down" a box from the menu at the top of the page, and then select (click) a point where a box is to be positioned. Note that prior to "clicking" (releasing) the left mouse button, the box can be moved about within the drawing frame until it is properly positioned. Finally select (click) points here additional boxes are to be positioned as illustrated in Figure 9. When the boxes had been drawn, push the "STOP" key on the keyboard to terminate the "sticky" drawing state.

Any series of objects such as standard symbols, used in flow charts, and other data diagrams, can be connected with a variety of connecting lines. There are 4 basic scenarios for drawing that may be used for this purpose at any time. Each is illustrated below in the types of graphic notation drawing frames where they are normally found. Note that in accordance with the present invention, connection operations are optimized to enable the fewest number of drawing operations possible.

In drawing a Structure Chart, referring to Figure 10, first obtain a frame for a Structure Chart using the Special Keyboard or an existing one using a template method. Press the "." (period) key. Point inside the frame and then "Pull down" the needed types of boxes from the menu at the top of the page, in this case "Global " and "Local Module." Position the Global data objects by "clicking" at the desired location, and push the "STOP" key. Add the desired number of Local Module objects in the same manner, then push the "STOP" key. Point inside the frame and then "Pull down" the needed types of connectors from the menu at the top of the page. Connect objects .1 and .3, and frames .1 and .4 with "call" connectors. Push the "STOP" key. Connect frames .2 and .5 with a "signal" connector in a similar manner.

Drawing connections can be made between objects in a data flow frame showing that 2 bending points are available. For this example, a data flow frame is used. In reference to Figure 10A, point to any location in the frame, "Pull down" "Data Transformation" from the menu at the top of the page, and position the Ist data frame by "clicking" at the desired location. Then add the desired number of data frames with additional "clicks" and push the "STOP" key. Connect data frames with an arrow, that is, "Pull down a "Time Discrete Data Flow" arrow and "click" it at points 1 and 2 to connect data frames 1 and 2. Repeat the process for Point 3 to Point 4. Push the "STOP" key. Using the right mouse button, adjust the arrow as desired by clicking at Al and A2 and make the adjustments at A3 and A4 (optional bending adjustment capability). Then type the name of the connectors to be labeled. In this case, the arrows "X" and "Y".

Note: that after the straight arrows are "adjusted", they have an "s" curved shape. For this example, they can be bent as desired. The straight arrow "X" in this example is left for the purpose of illustration. Use the Pro Illustrator to turn the grid "ON" or "OFF" by selecting within the frame and then selecting "Toggle Illustrator Soft Keys On/Off" in the menu at the top of the page. Curved lines look better when drawn with the grid turned "OFF" while Organization Charts look better if the grid is turned "ON"...

In drawing an Organization Chart and illustrating multipoint connections, referring to Figure 11, first obtain a frame for an Organization Chart using the Special Keyboard or an existing one using the template method. Press the "K" key. Next, point inside the frame and then "Pull down" the needed number of boxes from the menu at the top of the page. Position the frames by "clicking" at the desired locations, and push the "STOP" key. Finally, connect the frames by "pulling down" connectors from the menu. Point "click" at each of the points below to create "Multipoint Connections" and push the "STOP" key.

In drawing an Entity Relationship Diagram illustrating multi chain drawing, refer to figure 12. First, obtain a frame for an Entity Relationship Diagram using the Special Keyboard or an existing one using the template method and press the "M" key. Then point inside the frame and then "Pull down" the needed number of boxes from the menu at the top of the page. Position the frames by "clicking" at the desired locations and push the "STOP" key. Next, connect the frames by "pulling down" connectors from the menu. Position the connectors by "clicking" at the desired locations and push the "STOP" key. Finally, add copy as required, (such as a Key block etc.).

If an object is too small or too large for the graphic display, your needs, there is the capability to make it larger or smaller. This can be done by the following procedure. First, select an Object. To "Expand" it, press the "Expand" key on the keyboard. To contract it, press the "Expand" key while holding the "SHIFT" key, on the keyboard, down. The object will then grow or shrink on the grid site. See Figures 13 and 14. Note: The way an object expands/contracts is dependent on its name text frame properties.

There is also provided the option of changing the appearance and textual properties of graphic symbols drawn by means of window header menus. This is done in the frame within which the graphics is being created. These changes can be made locally, in which case any additional objects that are created will not reflect the local changes but will follow the appearance of the objects as they appear in the "Graphics Symbols" folder on the desktop. In the alternative, the changes can be applied to the objects in the "SVP Graphics Symbols" folder. By "modifying" the objects in the folder, the changed objects will become the standard for any additional objects drawn from the window headers. Note that it is important to understand that "NEW" objects are not being created.

The system provides for "MODIFYING" existing SVP objects as needed. The following process describes the steps that are required to modify the objects in the Transfer Objects folder. There is the choice of modifying only the text properties of the symbols or of modifying both the appearance and the textual properties as described in the following section. For modifying Text Properties and Reloading Objects, referring to Figure 15, find and open the "SVP Graphics Symbols" folder on the desktop. Select and open the document containing the objects within which the text is to be modified (in this case the "PERT/CPM" Chart). Next, select the text you wish to modify, and then change the text properties as shown in Figure 16.

When the Editing has been completed, referring to Figure 17, close the "SVP Graphics Symbols" folder. Point into the Attention Menu and select "Reload NEW SVP Graphics Symbols". Any objects that are created in the future will have the new characteristics that have been reloaded.

In modifying an object appearance and reloading the object, as shown in Figure 18, use the following procedure. Find and Open the "SVP Graphics Symbols" folder on the desktop. Select and open the document containing the objects that are to edited (the "Data Flow" Diagram in this example), and then select the object to be modified. Point into the Attention Menu at the top of the screen and select "Edit Structured Object". (The object will become unclustered.) Then, change the object's appearance as desired. Finally, select the object modified using the expanding box technique. Point into the Attention Menu at the top of the screen and select "Save Structured Object". (The new objects will be automatically clustered and saved.)

When the Editing has been completed, close the "SVP Graphics Symbols" folder, and point into the Attention Menu and select "Reload NEW SVP Graphics Symbols". Any frames that are created in the future will have the new characteristics that have been reloaded

There are also some recommended steps for Modifying Objects. For example, turn on the Grid when drawing objects and text frames so that their centers and the outside frames are "on grid". Change the properties of the "Name" text frame to allow the "expanding" properties you would like to use. Note that objects will expand with the "EXPAND" or contract with the "SHIFT-EXPAND" key. The number of expanding sides of the name frame determines how the object will expand. For example, for only one side expanding, the object will expand only in that direction, one grid increment per expand operation. For multiple side expanding, the object will expand in only those directions, one grid increment per expand operation. For all sides fixed (none expanding), the object will magnify a grid increment per expand operation. Note that additional information and instructions are available in the SVP Graphics Symbols folder.

Each of the SVP Graphics Symbols documents within the folder contain information about the Graphics Symbols. The document "EDIT Structured Object" contains instructions for modifying the shape or properties of any object and for reloading the symbols.

In accordance with the present invention, "Data Attachments" is the term used to refer to information associated with various graphic objects. The visible attachments differ from traditional text frames in a most important way. They are automated and backed up with automated tables (Attachment Property Sheets) that permit ease in updating throughout a documentation system and also, can be used for creating additional (new) documents containing parts of the information from the attachment property sheets. The functions of attachments enable tasks such as defining a person's responsibilities in a project. After the data has been entered in a chart or drawing frame, these tables will be placed in the ORACLETM Data Base at the time the user "checks" them in. The data inside the boxes of the organization chart in figure 19 are "attachments". The following example shows the displaying of the attachments for an Organization Chart with reference to Figure 20.

After an Organization Chart has been created, to access the Attachment Property Sheet, it is necessary to select within the frame and then pull down the General Drawing tool (the one shaped like a pencil) from the menu at the top of the page. The Attachment Property Sheet will appear on the desktop. Figure 21 illustrates an attachment property sheet from another document containing some of the same personnel as they relate to other activities. Note the change in the number of columns and in the titles that describe their purposes.

The number of columns in a table of attachment properties can vary in number to accommodate the needs of any chart or diagram. Columns can be added, deleted, copied to tables, and "made visible". The order (position in sequence) of the columns may be changed. Note that the ORACLETM data base will accommodate up to 256 columns of data. To perform any of the following tasks related to the design and functions of columns, the "Attachment Properties" must be shown.

The "Select Columns" function selects which columns appear in the attachment table. Deselecting a column does NOT delete it from the document. To select columns, the procedure is to first access the Attachment Properties Sheet. Then, select "Column Operations" in the menu at the top of the property sheet. The "Column Operations" property sheet appears. Select the "Select Columns" window. The windows containing the column titles appear in the "Select Column" property sheet. Note that all of the windows appear inverted (black) because all of the columns were "showing" (visible) in the Attachment Properties sheet, as shown in Figure 22. Next de-select (click) in the "Text Definition" and "Earliest Date" windows. Finally, select "Apply" in the menu at the top of the property sheet. The two columns disappear (become invisible) in the table, while the other columns have moved toward the left and "Last Date" and "Location" can now be seen within the illustration frame. Note that although they are not visible, data for "Text Description" and "Earliest Date" columns are still retained in the data base. Also note that when there are a large number of columns in a table and if many of the columns are selected to be showing (visible in the table), it will be necessary to scroll the table horizontally to be able to view all the columns of attachment properties. (See Figure 23.)

The "Edit Column Order" function changes the order in which the columns appear in the attachment table. To "Edit Column Order", first access the Attachment Properties Sheet. Then, select "Column Operations" in the menu at the top of the property sheet. The "Column Operations" property sheet appears. Next, select the "Edit Column Order" in the menu at the top of the property sheet. The "Column Order Editor" property sheet then appears, as shown in Figure 24. Next, select "Responsibility" and move it to the bottom of the list of column titles. Select "Location" and move it below "Outlook". The step is to select "Done" in the menu at the top of the "Column Order Editor" property sheet as shown in Figure 25. The "Column Operations" sheet shows the revised columns. Next select "Done" in the "Column Operations" menu. Select "Apply" and "Done" in the "Attachment Properties" sheet. Then reopen the "Attachment Properties" sheet to see that the columns have been rearranged. The position of the columns in the Attachment Properties sheet is changed to the new order as illustrated in Figures 26 and 27.

The "Add Columns" (Figure 28) adds new columns to the document. To add a column, it is necessary to access the Attachment Properties Sheet. Then select "Column Operations" in the menu at the top of the Attachment Properties Sheet. The "Column Operations" property sheet will now display two menu blocks and two windows. Note that when adding a new column there are two methods for "Naming" the new column. A name may be selected from the available names in the "Name" menu, or a name may be typed into the window next to the "Name" menu. The second menu is "Type". It contains three choices; "DATE", "CHAR", and "NUMBER" reflecting ORACLETM data types. Selecting any one of the three will cause that copy to appear in the "Type" window.

Next, select a name from the "Name" menu or type a name into the "Name window. Then select a type from the "TYPE" menu. Note that the "Type" window cannot be selected. Thus a "Type" cannot be keystroked into the window and there are restrictions to the three choices provided in the menu. Select "Apply" and the new column will appear in the Attachment Properties Sheet.

The function "Delete Columns" deletes columns and their contents from the document but not from the data base. To delete a column and its contents, first access the Attachment Properties Sheet. Then select "Column Operations" in the menu at the top of the Attachment Properties Sheet. The "Column Operations" property sheet will now display a "Name" window for each column in the table. Then select the "Delete Columns" window in the Column Operations property sheet. Then select the window(s) of the column(s) to be deleted. Finally, select "Apply" or "Done" in the menu at the top of the Column Operations property sheet as illustrated in Figure 29.

The "Describe Columns" function describes the "Types" of the attachment columns. To describe columns, it is again necessary to access the Attachment Properties Sheet. Select "Column Operations" in the menu at the top of the Attachment Properties Sheet. The "Column Operations" property sheet will now display a Table listing each column in the table under "Name" (Figure 30). The table contains three headings, Name, Type, and Length. Name is the name of the column. The specific type may be DATE, or NUMBER. Length is the corresponding allowed length of the columns (set automatically). (See Figure 31.)

The "Copy to Table" function allows copying an attachment table's content to an existing VP table or allows creating a new document with the attachment table in it on the desktop. Which of the two options will be performed, will be determined by what has been selected when "Copy to Table" is clicked. To create a document on the desktop that contains the attachment table, access an attachment Properties Sheet and select "Copy To Table" in the window header of the Attachment Properties Sheet. A document that contains the attachment table (a VP Table) will automatically appear on the desktop as shown in Figure 31. Note that it may be necessary to size each of the VP Table columns to a width that will allow the entire table to fit on the page.

To copy the attachment contents to an existing VP Table, the following procedure is used: Access an Attachment Properties Sheet and then access a VP Table in any document. Note the column must already be the same name as those in the attachment table. Select the VP Table by pointing down at the edge of it. (This will highlight it.) Select "Copy To Table" in the window header of the Attachment Properties Sheet". The contents of the attachment table will be copied (appended) to the VP Table as shown in Figures 32 and 33.

The "Make Visible" function allows Attachment contents to automatically appear as part of objects or connectors they describe in the diagram. Text frames are automatically appended to the objects or connectors that contain the content of the column(s) made visible. To make visible access the Attachment Properties Sheet and point - click in the Attachment Table header that contains the information intended to be made visible on the associated SVP Graphics Frame. Select "Make Visible" in the Attachment window header. Point down and hold down over any object or connector whose attachments are to be made visible. Then move the curscr around as you continue to point down. Note that the objects control points will appear, indicating that the selected object is referenced. Note that once an object is selected, the cursor may be moved away from the object for some distance. Point up to the position where the attachment is to appear and then release the mouse button. The contents of the Attachment table will appear in that location. Repeat the previous steps as necessary. Finally, press the "STOP" key to terminate these operations. (See Figures 34 and 35.) Note that there is no "Make Invisible" function for reversing the process for the attachment that has been appended to an object or connector. To remove an attachment, highlight the attachment and delete it being certain that the major highlight point is showing. Thus the data contained in the Attachment Properties Sheet will be undisturbed.

The "You Are Here" function shows where objects or connectors in a table are located in a Graphics Frame from the Attachment Table. And, where those in a Graphics Frame are located in an Attachment Table from the Graphics Frame. To execute "You Are Here", follow this procedure. From Table to Graphic Object, access the Attachment Table, and select a row in the Attachment Table. Then select "You Are Here" in the Attachment window header as shown in Figure 36. The corresponding Graphics object will "blink" 3 times.

From Graphic Object to Table, access the Attachment Table and select an object or connector. Then select "You Are Here" in the Attachment window header as shown in Figure 37. The corresponding object will highlight in the Attachment Table.

While there has been illustrated and described what is at present considered to be a preferred embodiment of the present invention, it will be appreciated that numerous changes and modifications are likely to occur to those skilled in the art, and it is intended in the appended claims to cover all those changes and modifications which fall within the scope of the present invention.

## Claims

1. A method of creating graphic objects on the display screen of an electronic workstation device having a keyboard and a display screen, the work station device being provided with a plurality of commands, comprising the steps of:
providing the commands on the workstation device screen in a graphic menu,
displaying the commands resulting from the selection of the graphic menu,
providing the commands with both graphics and text to illustrate the meaning of the commands, and
activating the commands to provide a plurality of graphic objects on the display screen.
2. The method of claim 1 including the step of providing an attachment data base associated with a graphic object.
3. The method of claim 1 or claim 2 including the step of providing a displayable property indicator associated with a graphic object.
4. The method of claim 2 including the step of selecting a given object and automatically highlighting the attachment data base associated with said object.
5. The method of claim 4 including the step of automatically positioning text within the data base associated with said object to be visible an the display screen.
6. The method of claim 1 including the step of selecting a portion of an attachment data base and automatically highlighting the associated graphic object.
7. A method of creating graphics in an electronic workstation device having a keyboard, a pointer, and a display screen desktop, comprising the steps of:
creating graphic model selections on a portion of the display,
selecting a properties function to set graphic properties of said model selections,
representing a plurality of associated objects for one of said model selection, and
selecting a sequence of said associated objects in order to produce a graphic model.
8. The method of claim 7 including the step of providing textual attachments related to selected associated objects
9. A method of creating graphic images on the display screen of an electronic workstation device having a keyboard and display screen, the work station device being provided with a plurality of graphic selectors, the graphic selectors including a combination of graphic and text, comprising the steps of:
designating at the workstation a particular one of the plurality of graphic selectors,
creating a graphics frame on the screen to construct the graphics images,
displaying a set-of objects and menus related to the designated one of the graphic selectors, the menus including a combination of text and graphics,
selecting the desired object from the set of objects, and
positioning the desired object within the frame.
10. The method of claim 9 including the steps of positioning additional objects within the frame, selecting a function icon related to the objects, and applying the function icon to said objects within the frame.
11. The method of claim 9 including the step of altering the size of an object within the frame.
12. The method of claim 9 including the step of modifying an object by identifying the object to be modified, selecting a modification for the identified object, storing the modified object in a given location, and reloading the selected modified object in memory wherein additional created graphics frames having objects will be automatically provided with said modification.
13. The method of claim 12 wherein the step of selecting the modification includes the step of changing the properties associated with the object.
14. A method of changing frame properties on a display screen of an electronic workstation device having a keyboard, a pointer, and a display screen with frames including headers and having given properties for creating graphic displays, comprising the steps of:
identifying a frame, the frame having a first set of properties including graphic objects to be drawn within the frame,
selecting a properties function to provide said frame with a second set of properties including graphic objects to be drawn within the frame, and
automatically changing the menus related to the frame whereby the frame is provided with said second set of properties.

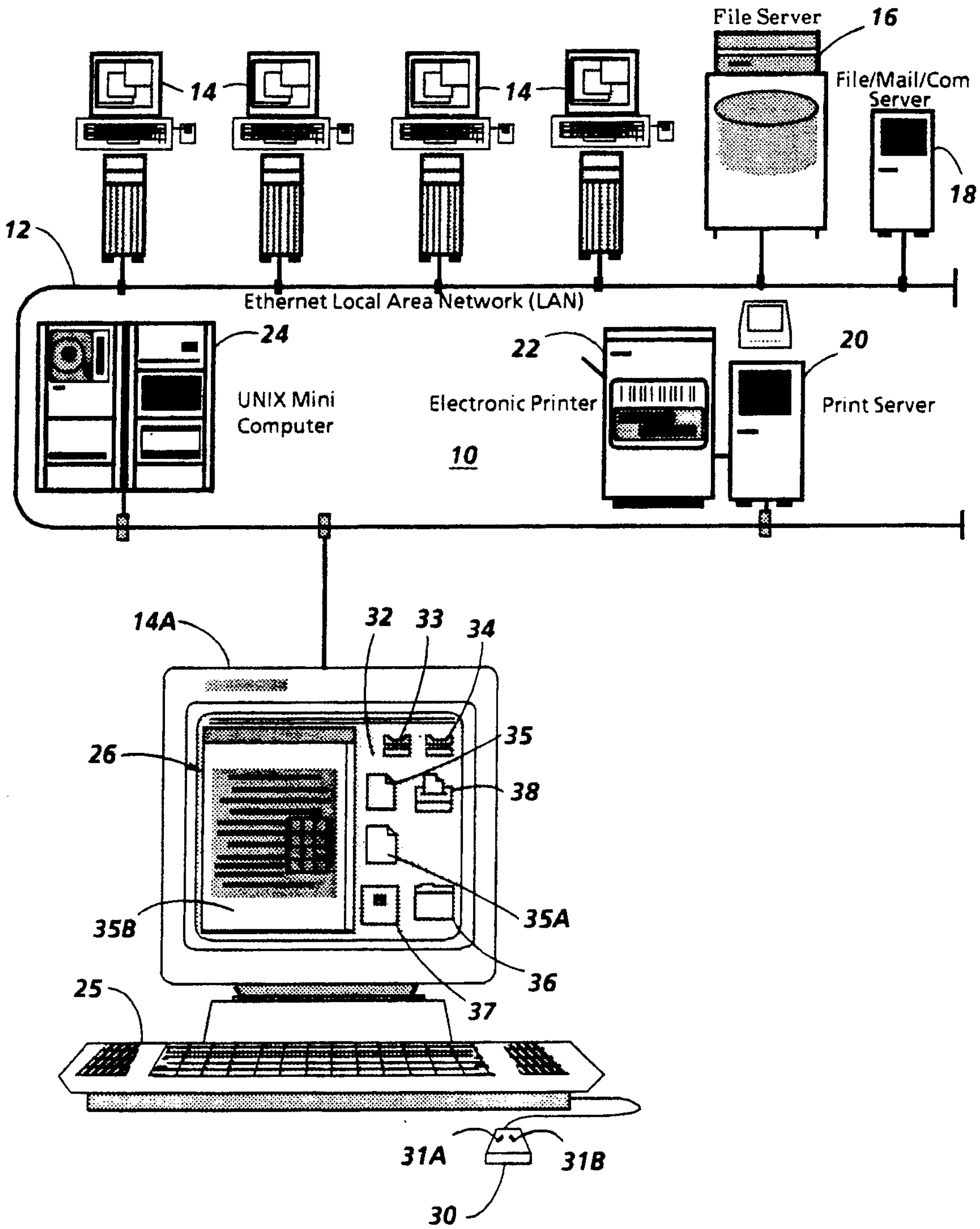
File Server
16
14
14
File/Mail/Com Server
18
12
Ethernet Local Area Network (LAN)
24
22
20
UNIX Mini Computer
Electronic Printer
Print Server
10
14A
32
33
34
35
26
38
35A
35B
36
25
37
31A
31B
30

FIG. 1

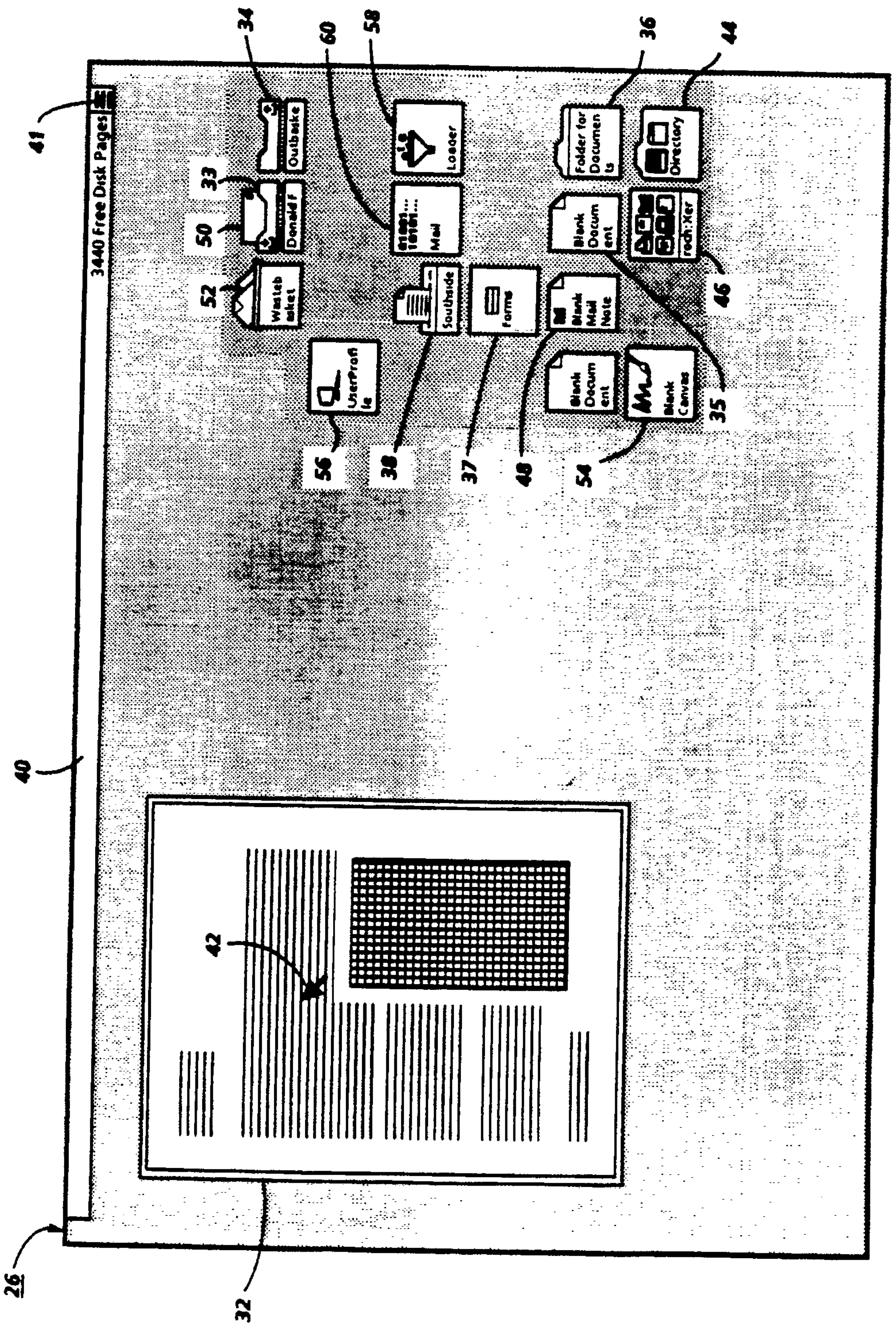
3440 Free Disk Pages
Wastebasket
Outbasket
Loader
Mail
Southside
Forms
UserProfile
Blank Document
Blank Mail Note
Blank Canvas
Folder for Documents
Directory
26
32
40
41
42
33
34
35
36
37
38
44
46
48
50
52
54
56
58
60

FIG. 2

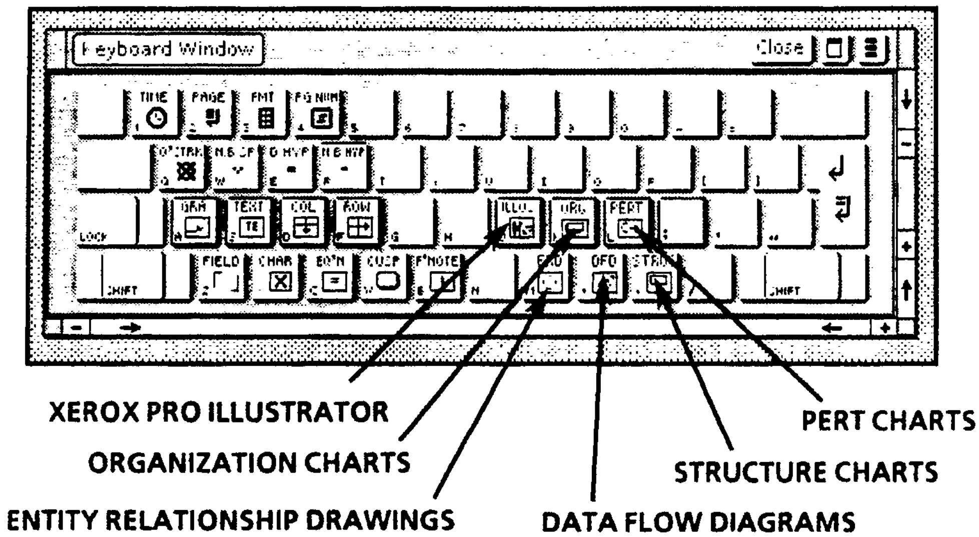
Keyboard Window
Close
XEROX PRO ILLUSTRATOR
ORGANIZATION CHARTS
ENTITY RELATIONSHIP DRAWINGS
PERT CHARTS
STRUCTURE CHARTS
DATA FLOW DIAGRAMS

*FIG. 3*

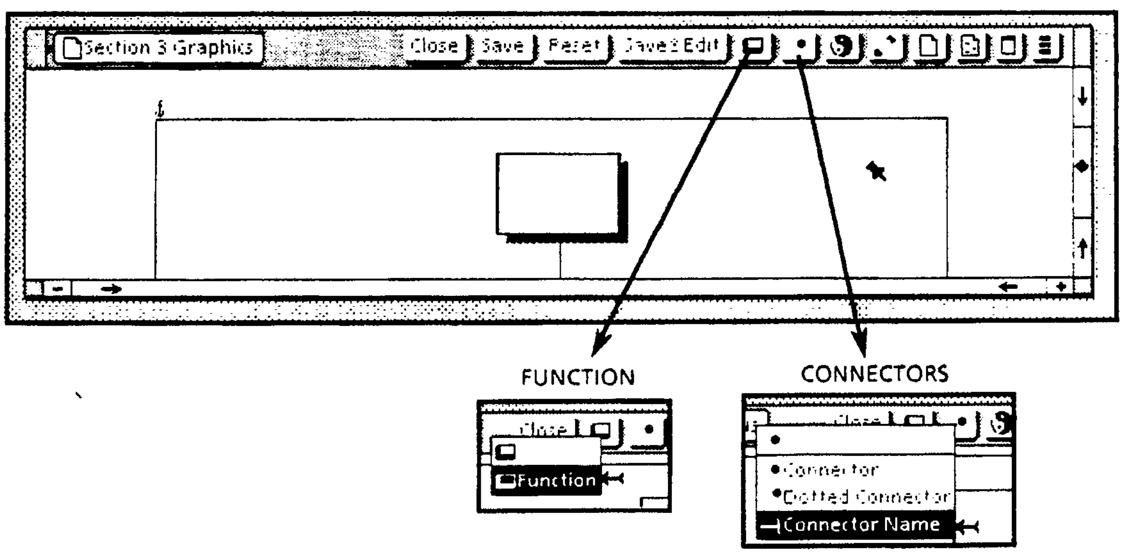
Section 3 Graphics
Close
Save
Reset
Save & Edit
FUNCTION
CONNECTORS
Function
Connector
Dotted Connector
Connector Name

*FIG. 4*

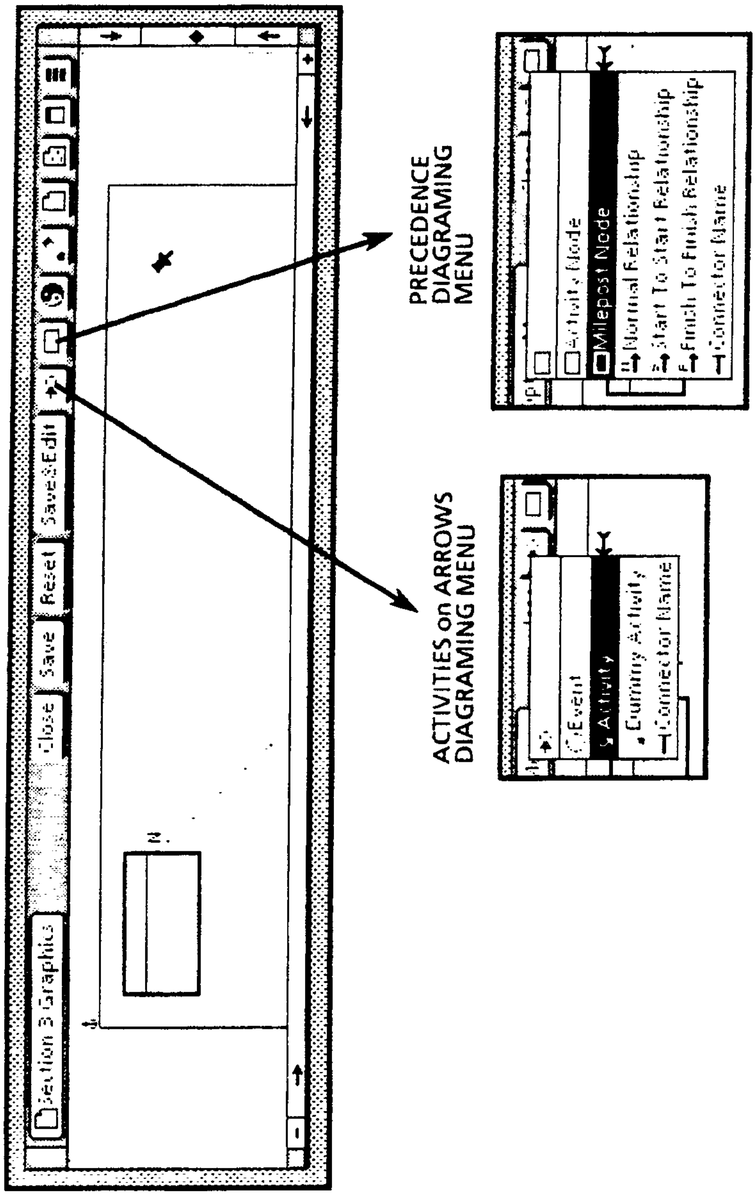
Section 3 Graphics
Close
Save
Reset
Save&Edit
PRECEDENCE DIAGRAMING MENU
Activity Node
Milepost Node
Normal Relationship
Start To Start Relationship
Finish To Finish Relationship
Connector Name
ACTIVITIES on ARROWS DIAGRAMING MENU
Event
Activity
Dummy Activity
Connector Name

FIG. 5

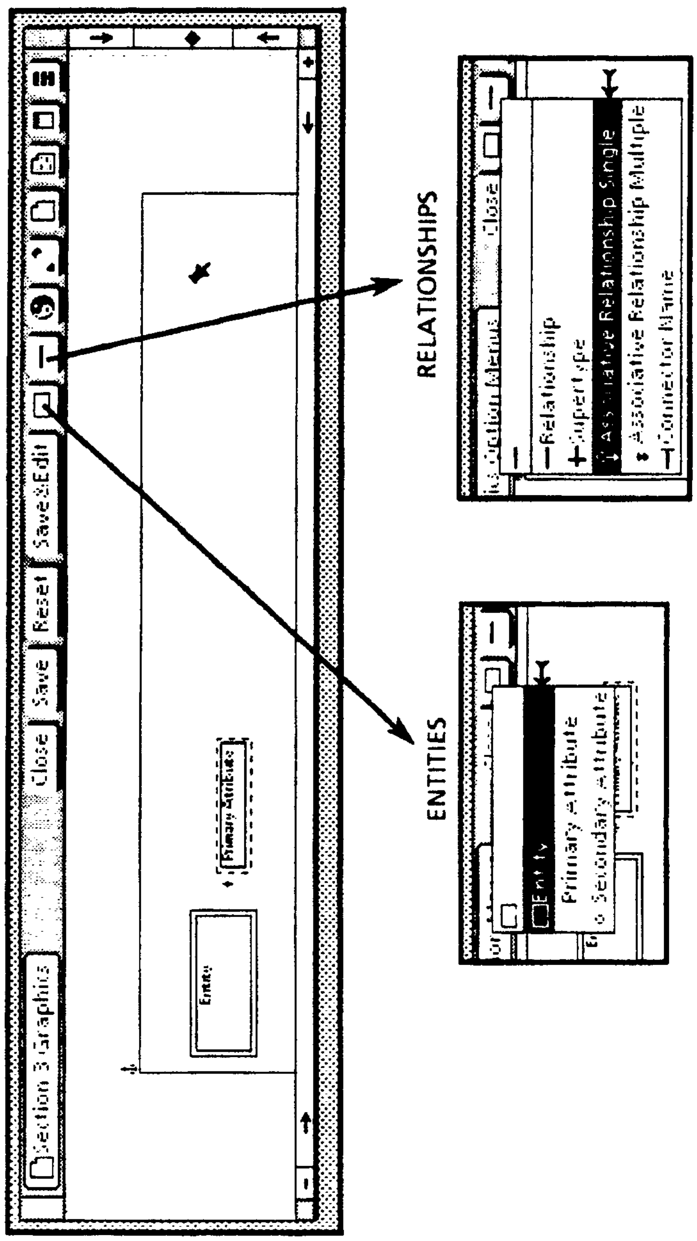
Section 3 Graphics
Close
Save
Reset
Save&Edit
Entity
Primary Attribute
RELATIONSHIPS
Close
Relationship
Supertype
Associative Relationship Single
Associative Relationship Multiple
Connector Name
ENTITIES
Entity
Primary Attribute
Secondary Attribute

*FIG. 6*

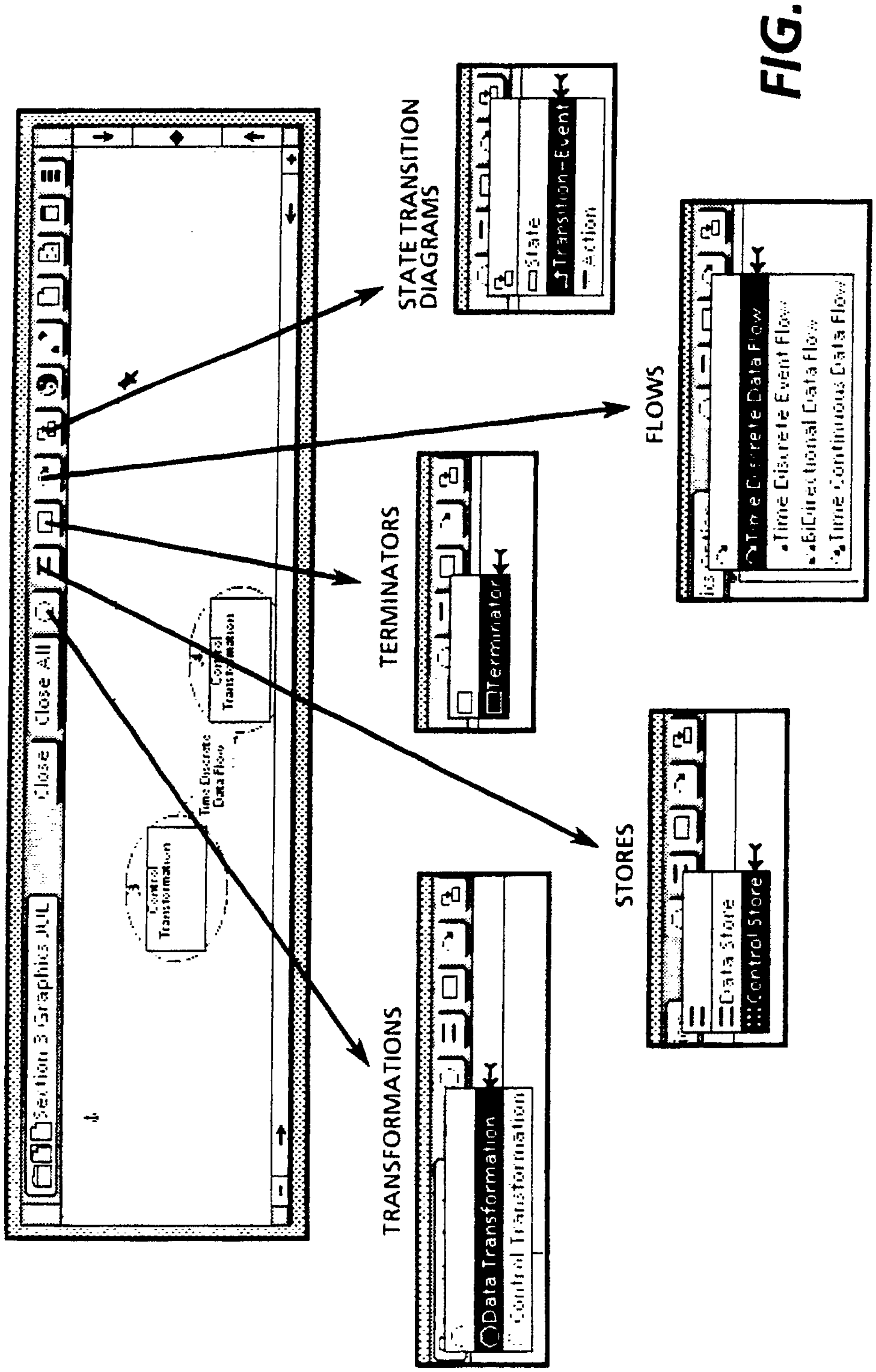
STATE TRANSITION DIAGRAMS
State
Transition-Event
Action
FLOWS
Time Discrete Data Flow
Time Discrete Event Flow
BiDirectional Data Flow
Time Continuous Data Flow
TERMINATORS
Terminator
STORES
Data Store
Control Store
TRANSFORMATIONS
Data Transformation
Control Transformation
Close
Close All
Time Discrete Data Flow
Control Transformation

FIG. 7

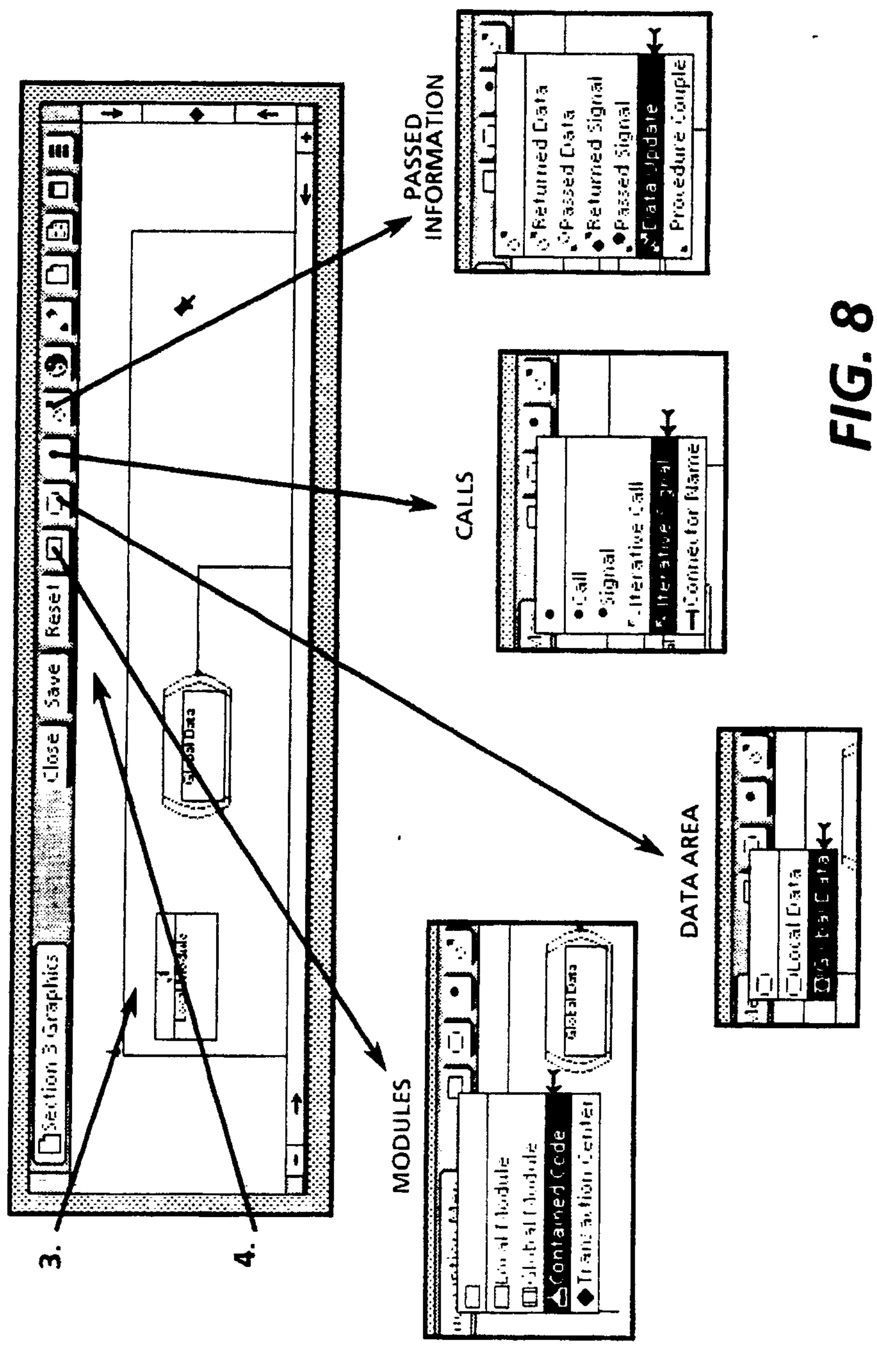
PASSED INFORMATION
CALLS
DATA AREA
MODULES
3.
4.
Section 3 Graphics
Close
Save
Reset

FIG. 8

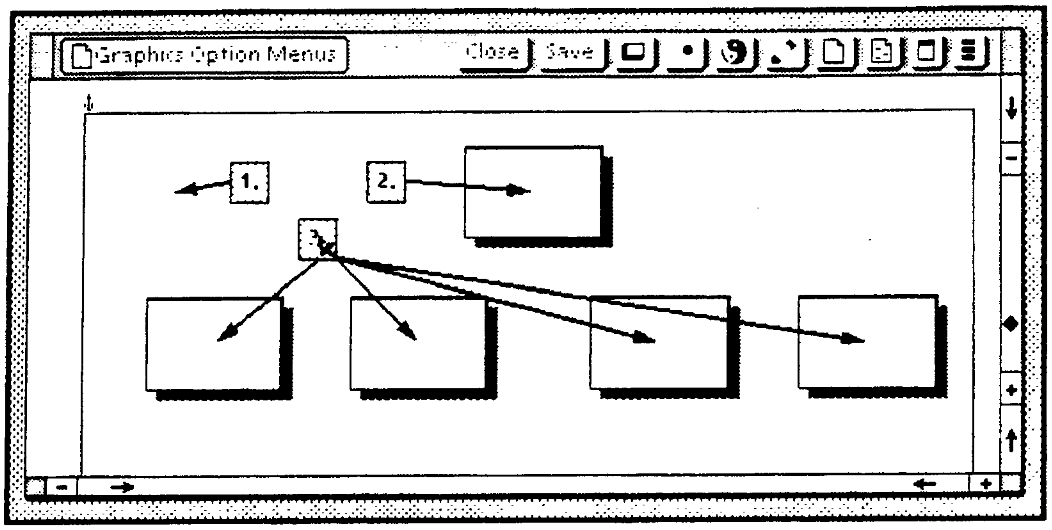


FIG. 9

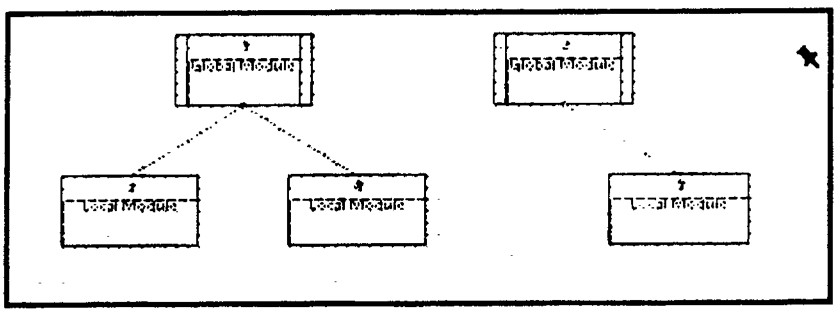

FIG. 10

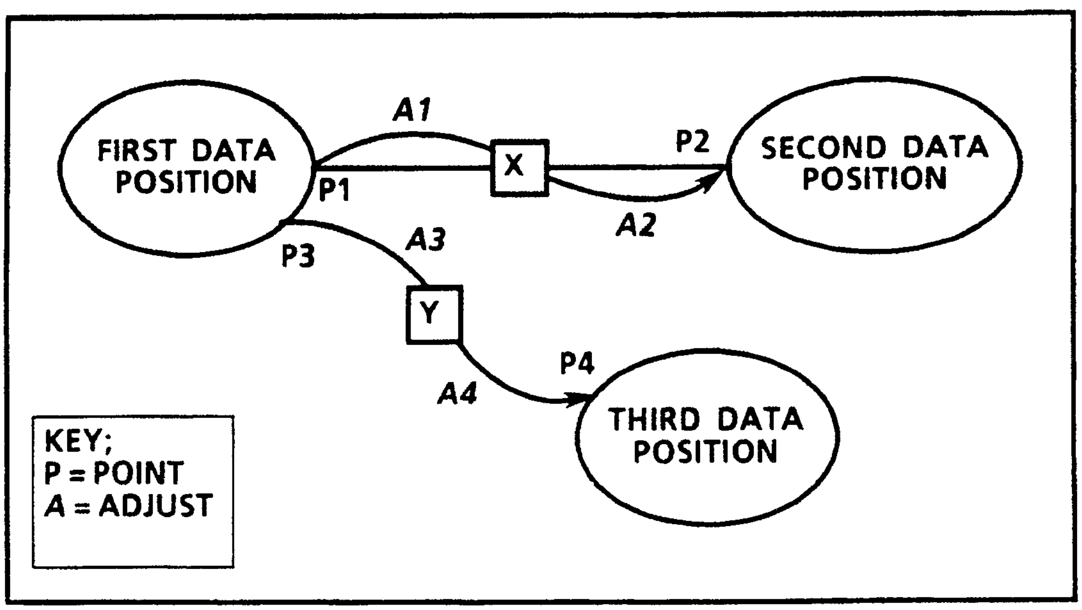


FIG. 10A

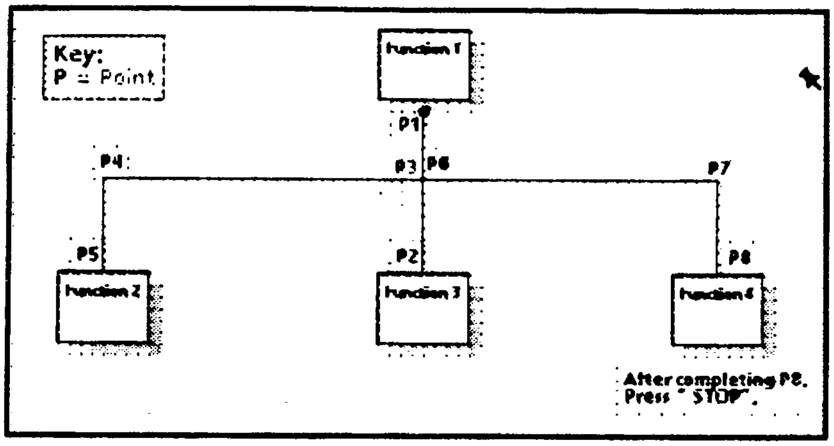


FIG. 11

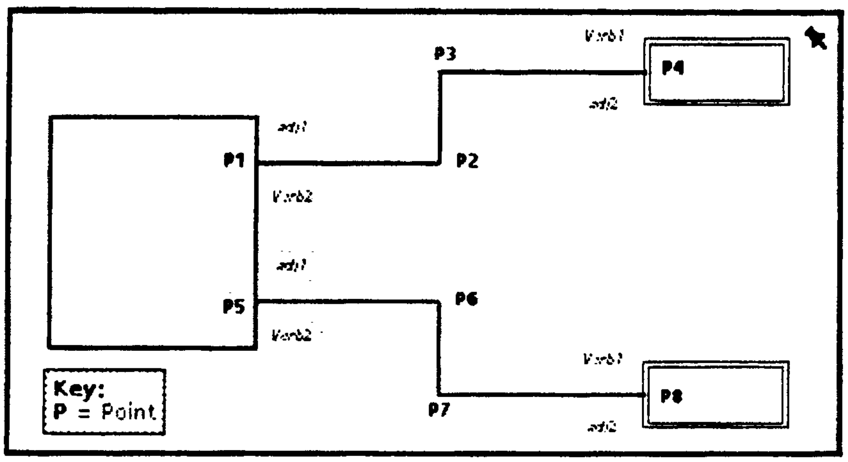


FIG. 12

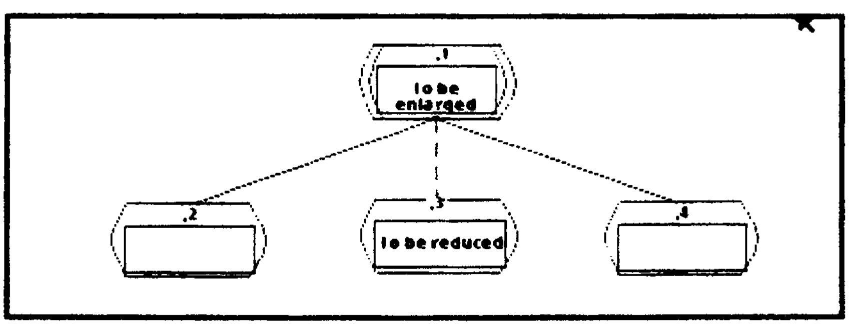


FIG. 13

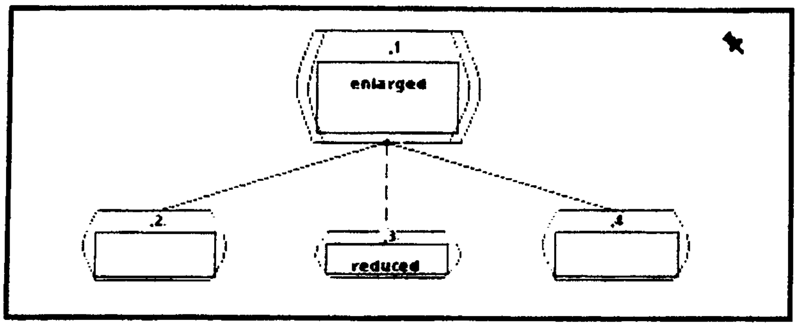


FIG. 14

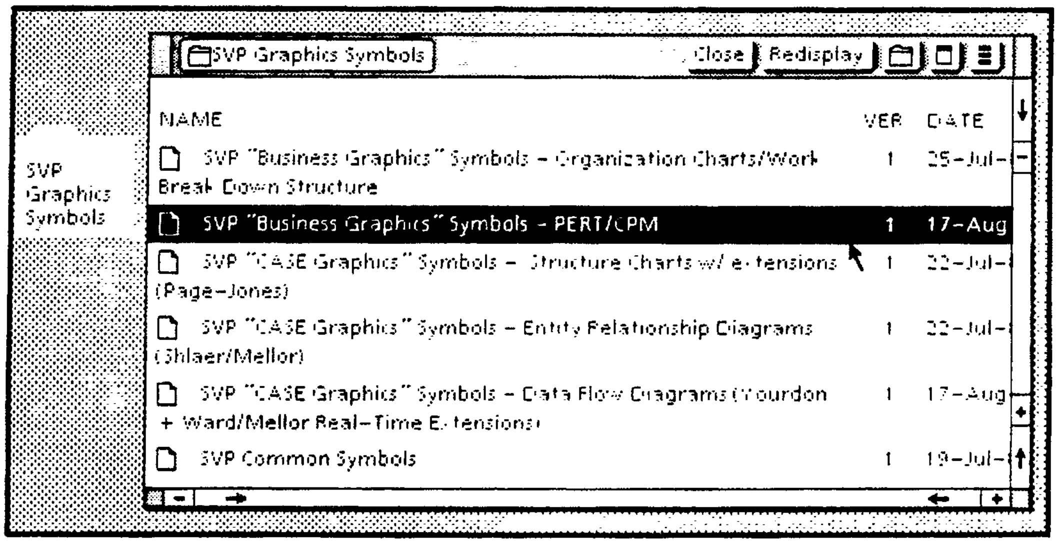


FIG. 15

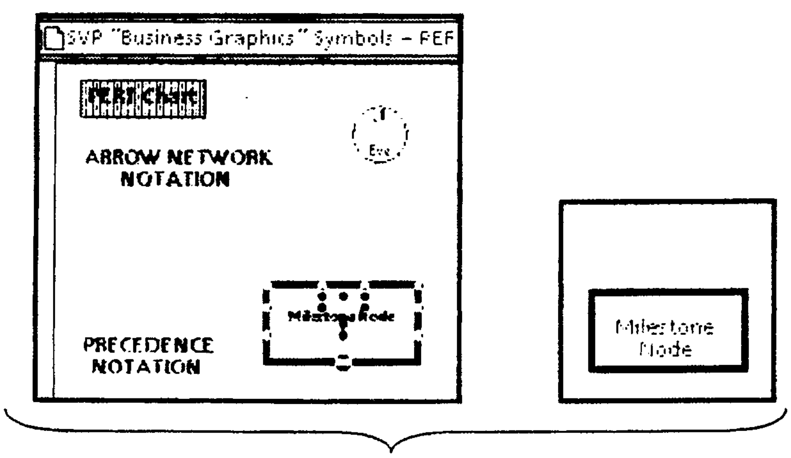


FIG. 16

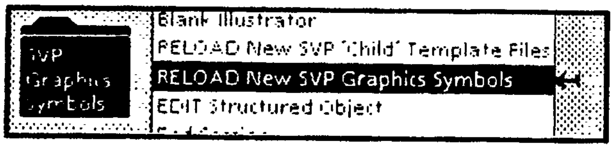
SVP
Graphics
Symbols
Blank Illustrator
RELOAD New SVP 'Child' Template Files
RELOAD New SVP Graphics Symbols
EDIT Structured Object

FIG. 17

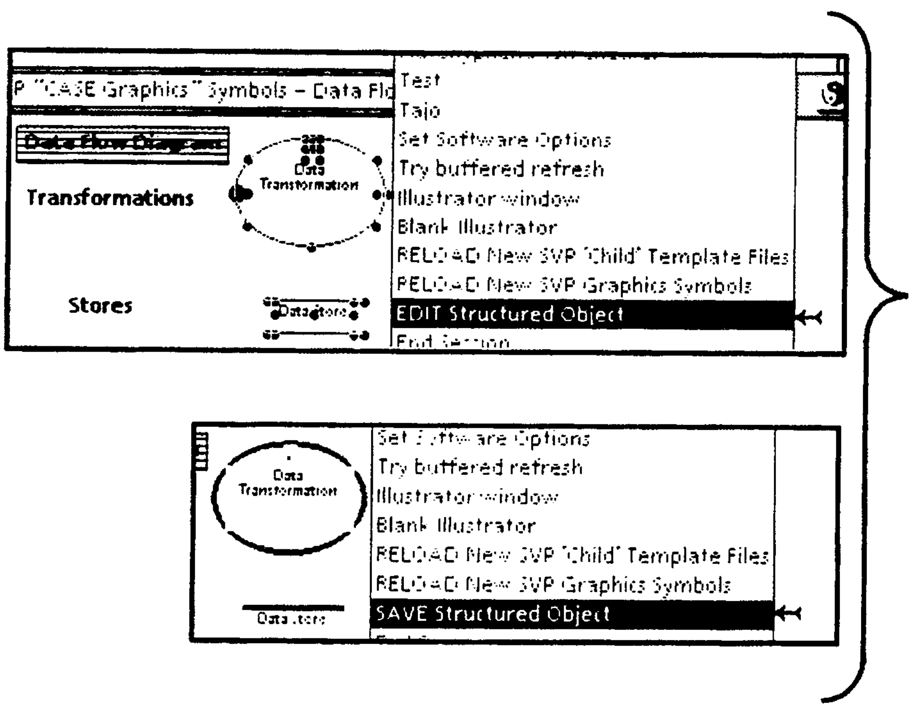
SVP "CASE Graphics" Symbols – Data Flo
Data Flow Diagrams
Transformations
Data Transformation
Stores
Datastore
Test
Tajo
Set Software Options
Try buffered refresh
Illustrator window
Blank Illustrator
RELOAD New SVP 'Child' Template Files
RELOAD New SVP Graphics Symbols
EDIT Structured Object
End Session
Data Transformation
Data store
Set Software Options
Try buffered refresh
Illustrator window
Blank Illustrator
RELOAD New SVP 'Child' Template Files
RELOAD New SVP Graphics Symbols
SAVE Structured Object

FIG. 18

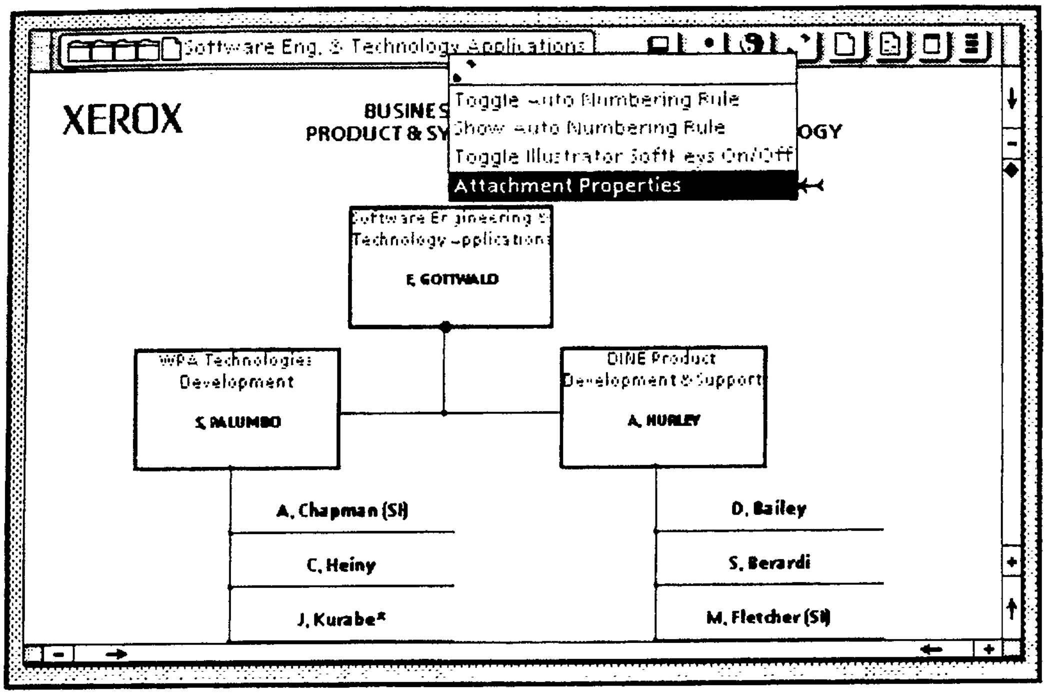
Software Eng. & Technology Applications
XEROX
BUSINES
PRODUCT & SY
OGY
Toggle Auto Numbering Rule
Show Auto Numbering Rule
Toggle Illustrator SoftKeys On/Off
Attachment Properties
Software Engineering & Technology Applications
E. GOTTWALD
WPA Technologies Development
S. PALUMBO
DINE Product Development & Support
A. HURLEY
A. Chapman (SI)
C. Heiny
J. Kurabe*
D. Bailey
S. Berardi
M. Fletcher (SI)

*FIG. 19*

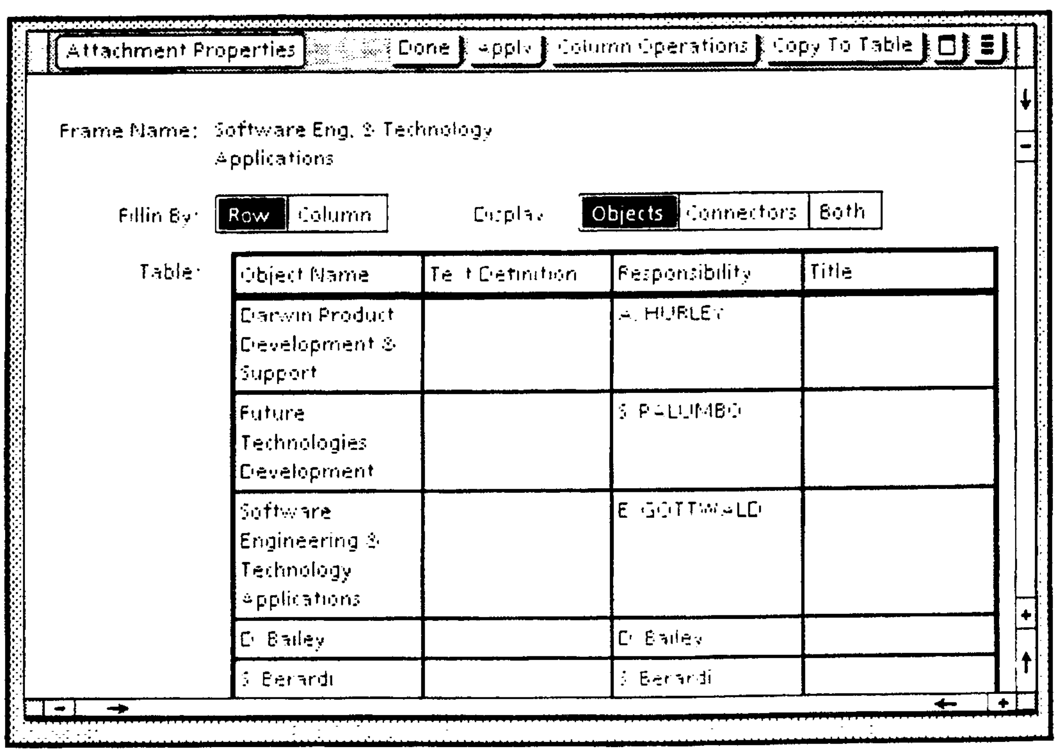
Attachment Properties
Done
Apply
Column Operations
Copy To Table
Frame Name: Software Eng. & Technology Applications
Fillin By: Row Column
Display: Objects Connectors Both
Table:
Object Name
Text Definition
Responsibility
Title
Darwin Product Development & Support
A. HURLEY
Future Technologies Development
S. PALUMBO
Software Engineering & Technology Applications
E. GOTTWALD
D. Bailey
D. Bailey
S. Berardi
S. Berardi

*FIG. 20*

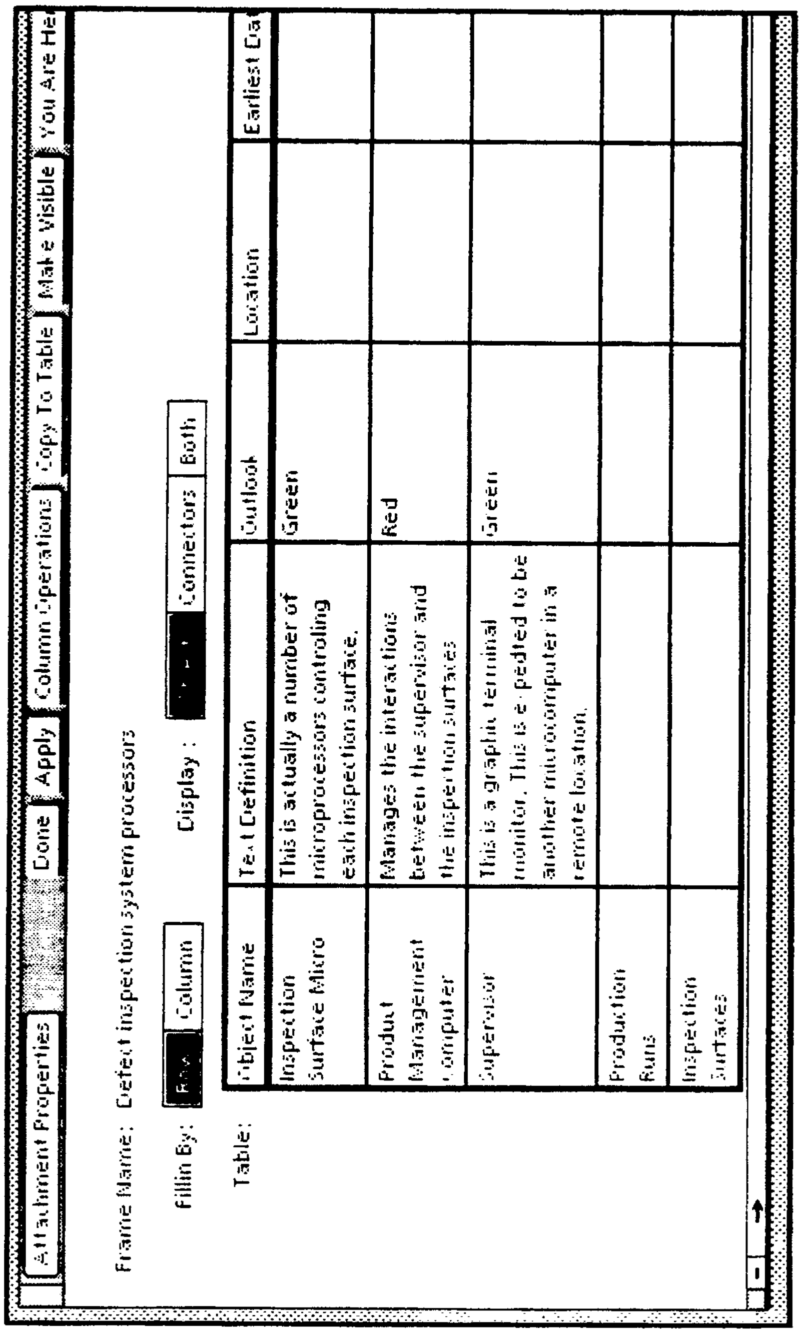
Attachment Properties
Done
Apply
Column Operations
Copy To Table
Make Visible
You Are He
Frame Name: Defect inspection system processors
Fillin By:
Row
Column
Display:
Connectors
Both
Table:
Object Name
Text Definition
Outlook
Location
Earliest Da
Inspection Surface Micro
This is actually a number of microprocessors controling each inspection surface.
Green
Product Management Computer
Manages the interactions between the supervisor and the inspection surfaces
Red
Supervisor
This is a graphic terminal monitor. This is expected to be another microcomputer in a remote location.
Green
Production Runs
Inspection Surfaces

FIG. 21

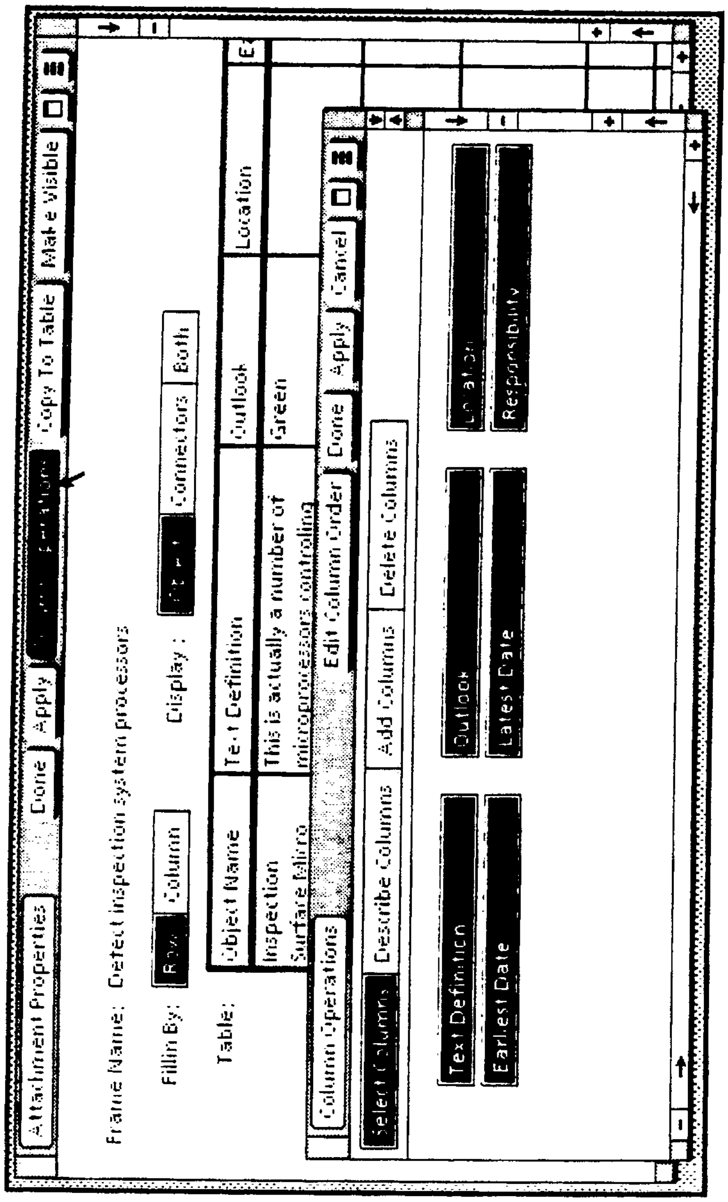
Attachment Properties
Done
Apply
Copy To Table
Make Visible
Frame Name: Detect inspection system processors
Fillin By:
Row
Column
Display:
Connectors
Both
Table:
Object Name
Text Definition
Outlook
Location
Inspection
Surface Micro
This is actually a number of
microprocessors controling
Green
Column Operations
Edit Column Order
Done
Apply
Cancel
Select Columns
Describe Columns
Add Columns
Delete Columns
Text Definition
Earliest Date
Outlook
Latest Date
Responsibility

*FIG. 22*

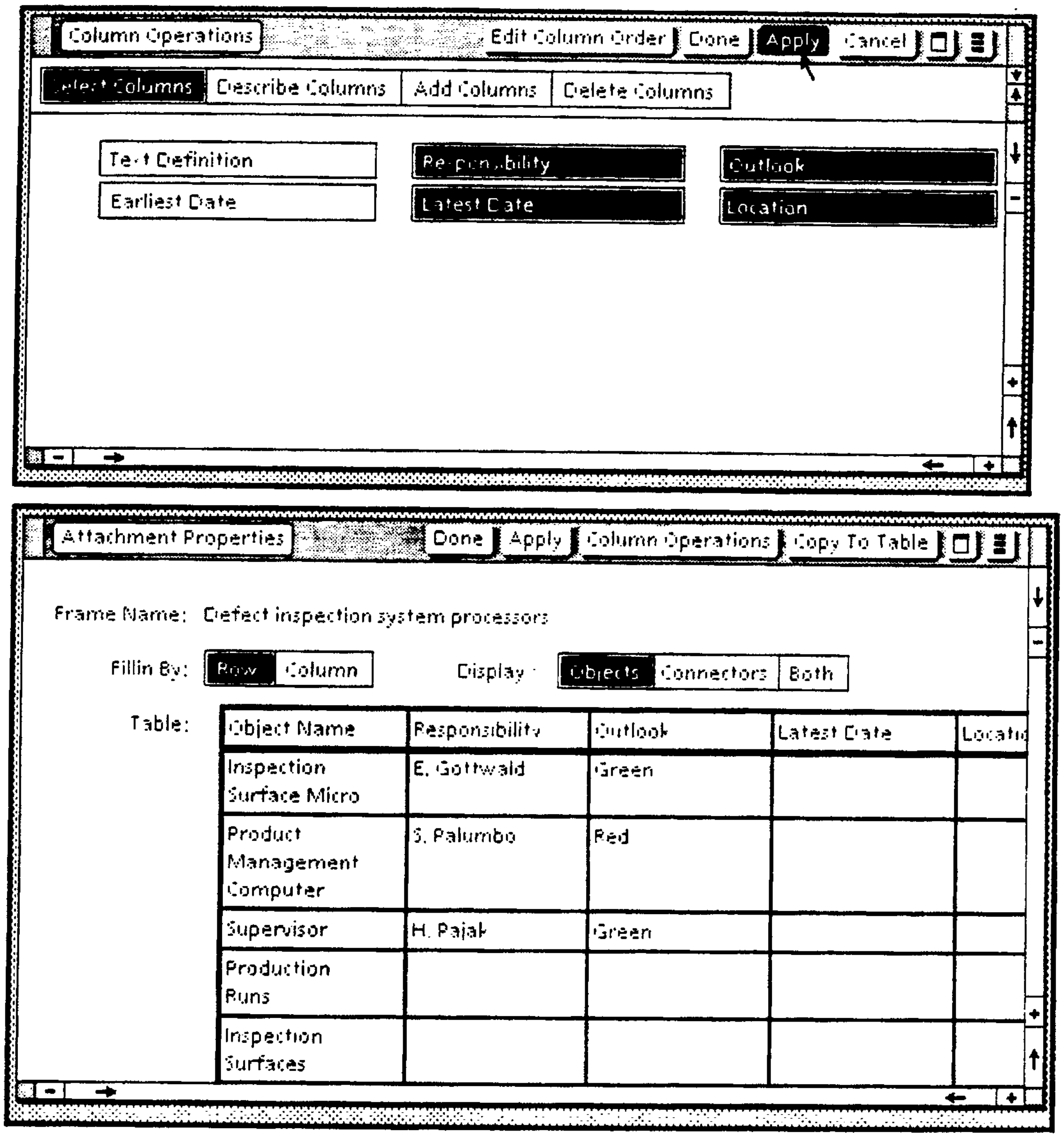
Column Operations
Edit Column Order
Done
Apply
Cancel
Select Columns
Describe Columns
Add Columns
Delete Columns
Text Definition
Responsibility
Outlook
Earliest Date
Latest Date
Location
Attachment Properties
Done
Apply
Column Operations
Copy To Table
Frame Name: Defect inspection system processors
Fillin By:
Row
Column
Display:
Objects
Connectors
Both
Table:
Object Name
Responsibility
Outlook
Latest Date
Locatio
Inspection Surface Micro
E. Gottwald
Green
Product Management Computer
S. Palumbo
Red
Supervisor
H. Pajak
Green
Production Runs
Inspection Surfaces

*FIG. 23*

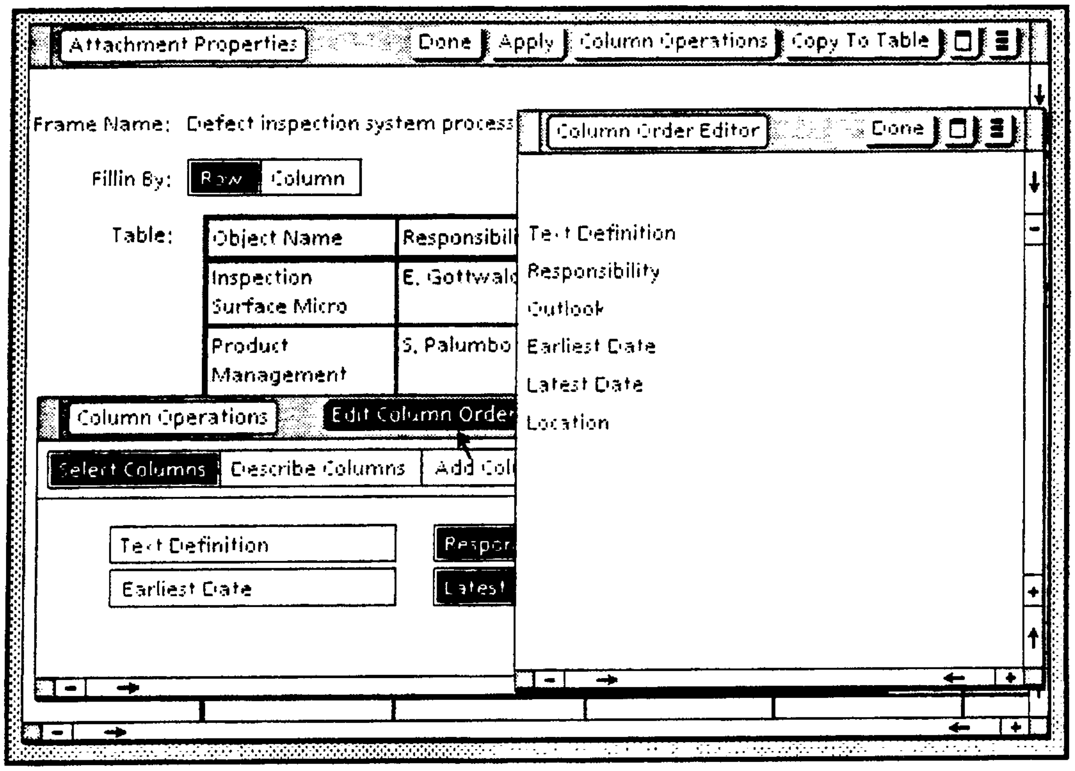
Attachment Properties
Done
Apply
Column Operations
Copy To Table
Frame Name: Defect inspection system process
Fillin By:
Row
Column
Table:
Object Name
Responsibili
Inspection Surface Micro
E. Gottwald
Product Management
S. Palumbo
Column Operations
Edit Column Order
Select Columns
Describe Columns
Add Col
Text Definition
Earliest Date
Respon
Latest
Column Order Editor
Done
Text Definition
Responsibility
Outlook
Earliest Date
Latest Date
Location

*FIG. 24*

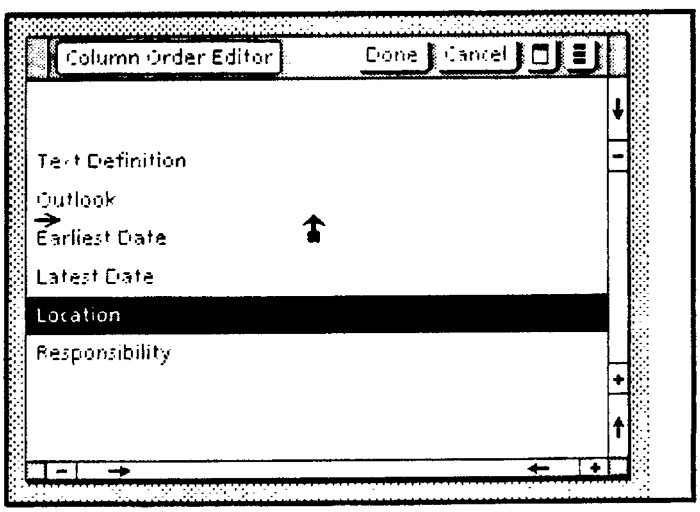
Column Order Editor
Done
Cancel
Text Definition
Outlook
Earliest Date
Latest Date
Location
Responsibility

*FIG. 25*

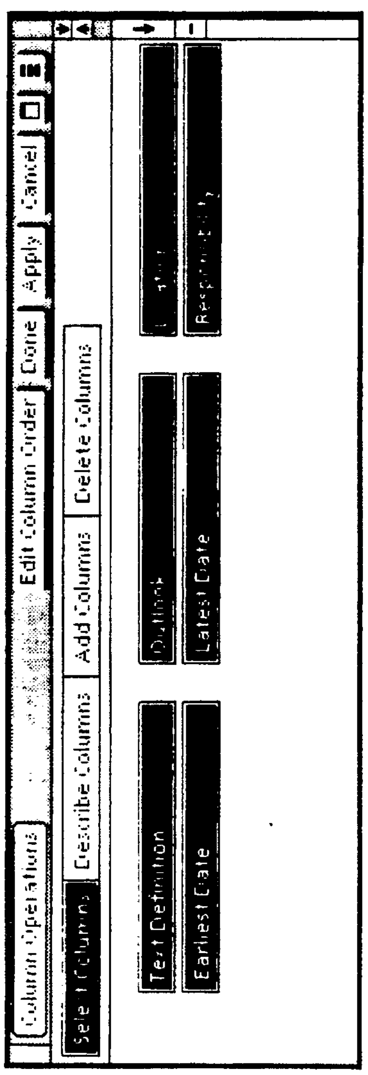
Column Operations
Edit Column Order
Done
Apply
Cancel
Select Columns
Describe Columns
Add Columns
Delete Columns
Text Definition
Outlook
Earliest Date
Latest Date

FIG. 26

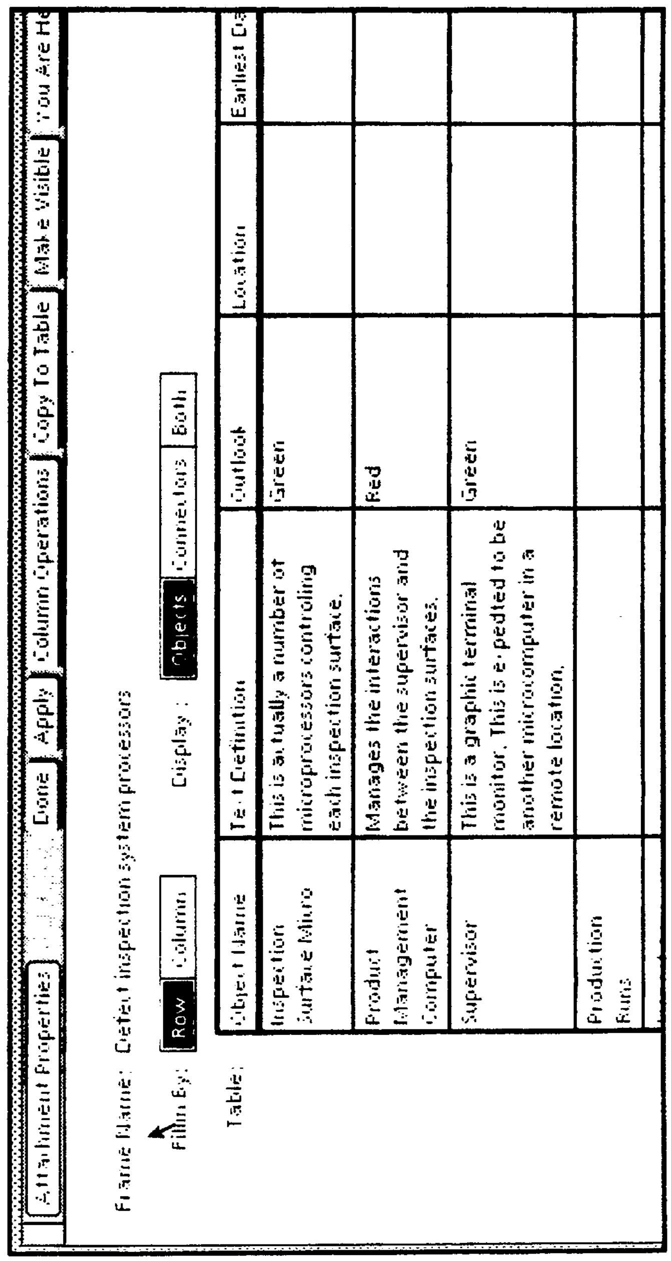
Attachment Properties
Done
Apply
Column Operations
Copy To Table
Make Visible
Frame Name: Defect inspection system processors
Fill In By:
Row
Column
Display:
Objects
Connectors
Both
Table:
Object Name
Text Definition
Outlook
Location
Inspection Surface Micro
This is actually a number of microprocessors controling each inspection surface.
Green
Product Management Computer
Manages the interactions between the supervisor and the inspection surfaces.
Red
Supervisor
This is a graphic terminal monitor. This is expected to be another microcomputer in a remote location.
Green
Production Runs

FIG. 27

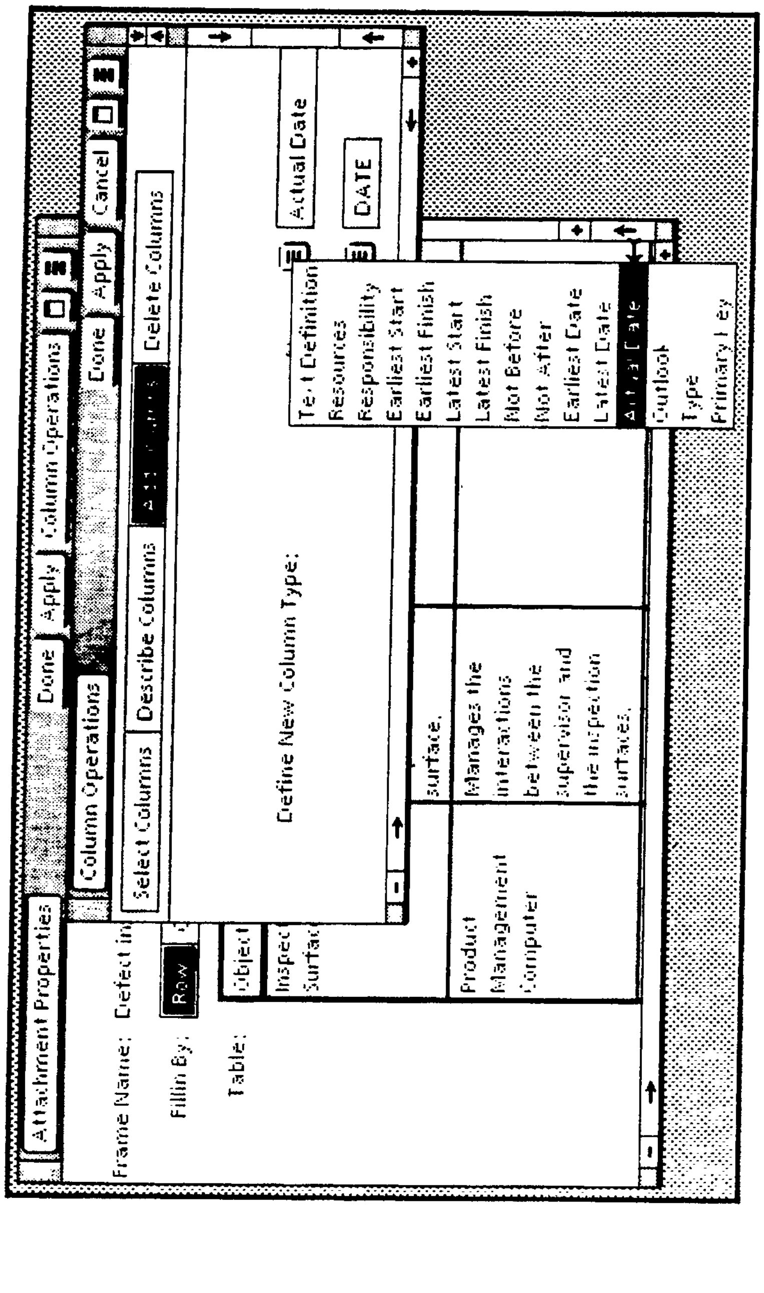

Attachment Properties
Done
Apply
Column Operations
Cancel
Frame Name:
Fillin By:
Row
Table:
Select Columns
Describe Columns
Delete Columns
Define New Column Type:
Actual Date
DATE
Text Definition
Resources
Responsibility
Earliest Start
Earliest Finish
Latest Start
Latest Finish
Not Before
Not After
Earliest Date
Latest Date
Outlook
Type
Primary Key
Product Management Computer
Manages the interactions between the supervisor and the inspection surfaces.


FIG. 28

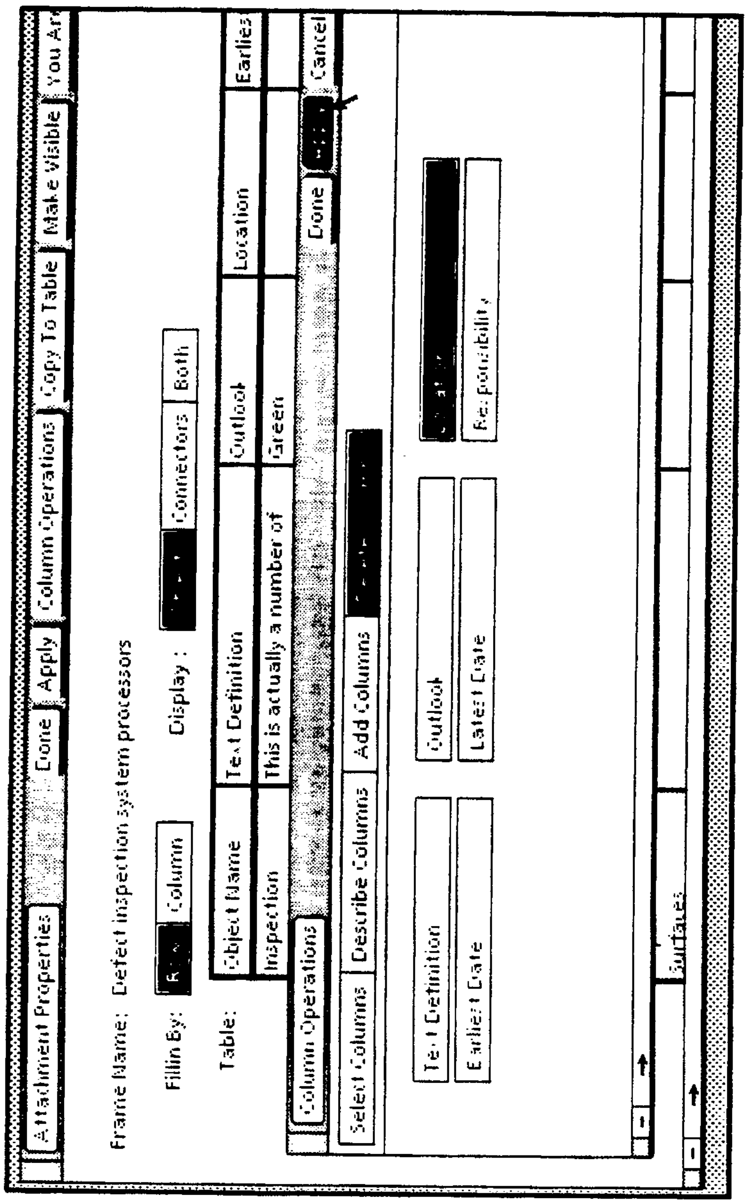
Attachment Properties
Done
Apply
Column Operations
Copy To Table
Make Visible
You Ar
Frame Name: Defect inspection system processors
Fillin By:
Column
Display:
Connectors
Both
Table:
Object Name
Text Definition
Outlook
Location
Earlies
Inspection
This is actually a number of
Green
Column Operations
Done
Cancel
Select Columns
Describe Columns
Add Columns
Text Definition
Outlook
Earliest Date
Latest Date
Responsibility
Surfaces

FIG. 29

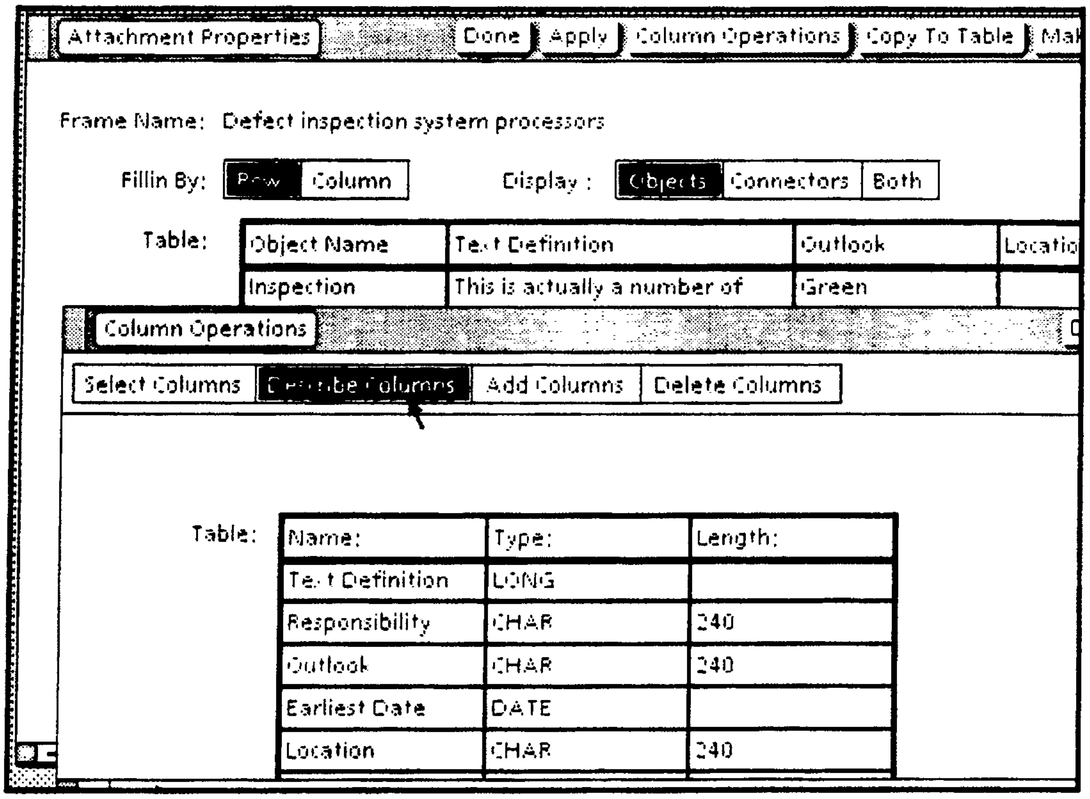
Attachment Properties
Done
Apply
Column Operations
Copy To Table
Frame Name: Defect inspection system processors
Fillin By:
Column
Display :
Connectors
Both
Table:
Object Name
Text Definition
Outlook
Inspection
This is actually a number of
Green
Column Operations
Select Columns
Add Columns
Delete Columns
Table:
Name:
Type:
Length:
Text Definition
LONG
Responsibility
CHAR
240
Outlook
CHAR
240
Earliest Date
DATE
Location
CHAR
240

FIG. 30

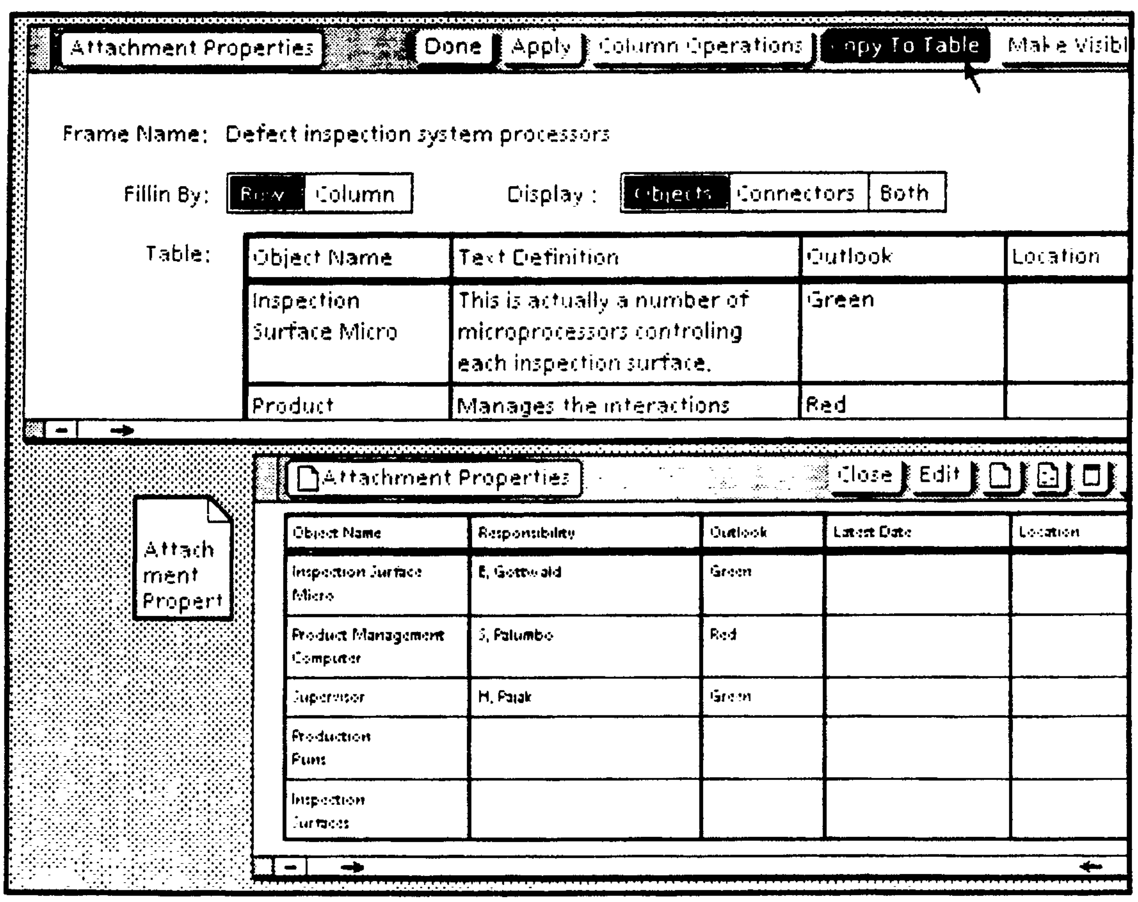
Attachment Properties
Done
Apply
Column Operations
Make Visibl
Frame Name: Defect inspection system processors
Fillin By:
Column
Display :
Connectors
Both
Table:
Object Name
Text Definition
Outlook
Location
Inspection Surface Micro
This is actually a number of microprocessors controling each inspection surface.
Green
Product
Manages the interactions
Red
Attach ment Propert
Attachment Properties
Close
Edit
Object Name
Responsibility
Outlook
Latest Date
Location
Inspection Surface Micro
E, Gottwald
Green
Product Management Computer
S, Palumbo
Red
Supervisor
H, Pajak
Green
Production Runs
Inspection Surfaces

FIG. 31

FIG. 32

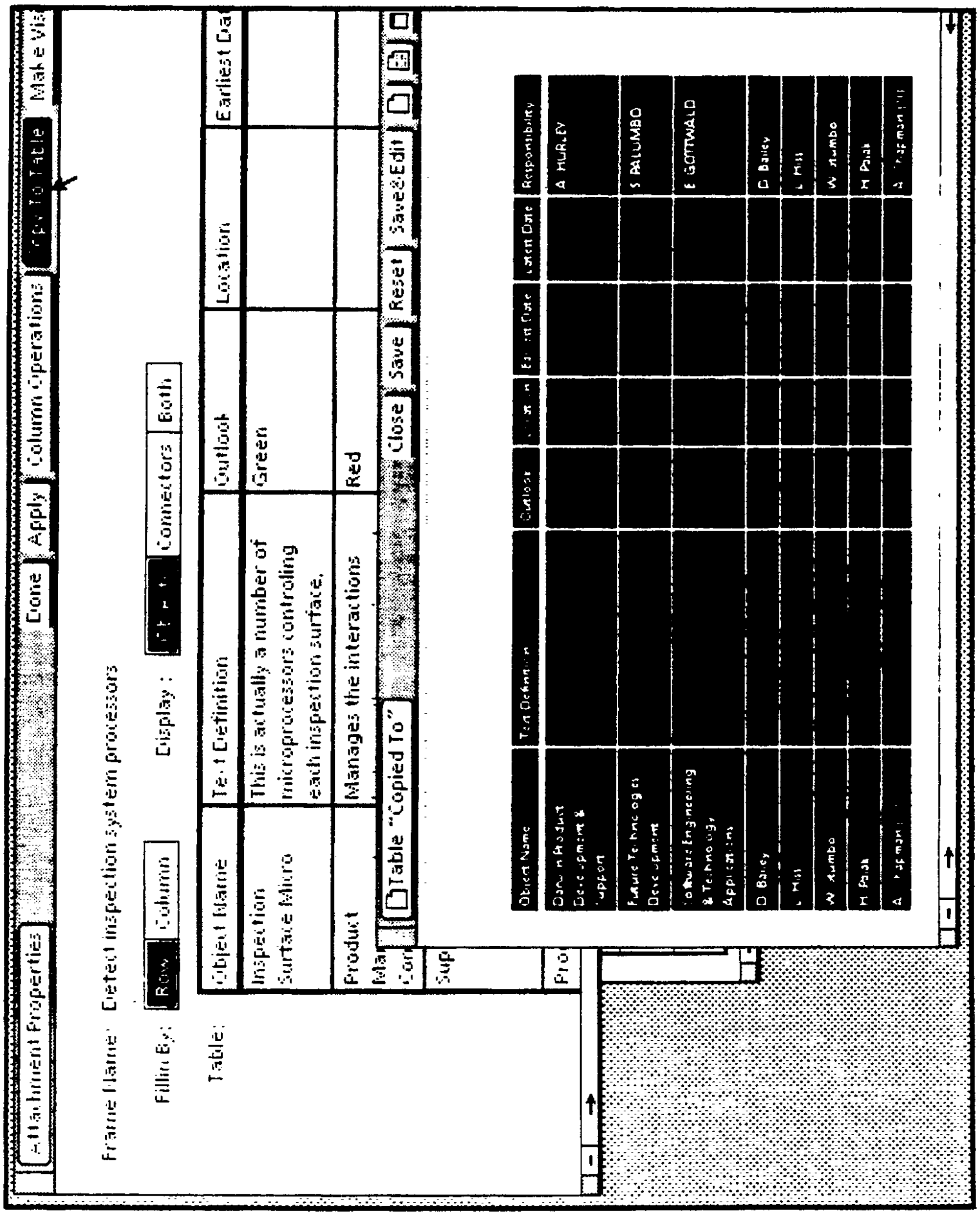
Attachment Properties
Done
Apply
Column Operations
Make Vis
Frame Name: Detect inspection system processors
Fillin By:
Row
Column
Display:
Connectors
Both
Table:
Object Name
Text Definition
Outlook
Location
Earliest Dat
Inspection Surface Micro
This is actually a number of microprocessors controling each inspection surface.
Green
Product
Manages the interactions
Red
Table "Copied To"
Close
Save
Reset
Save&Edit

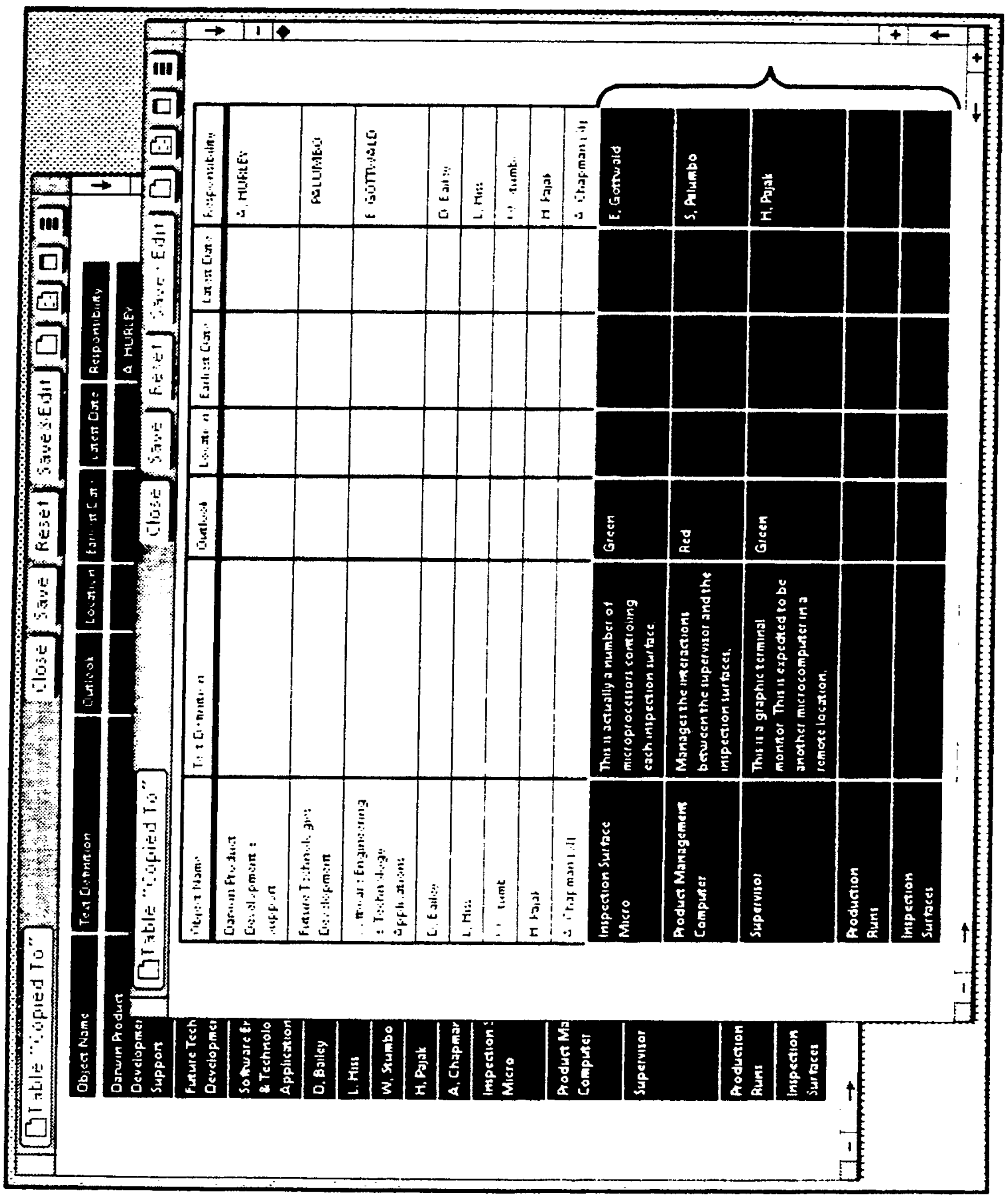

FIG. 33

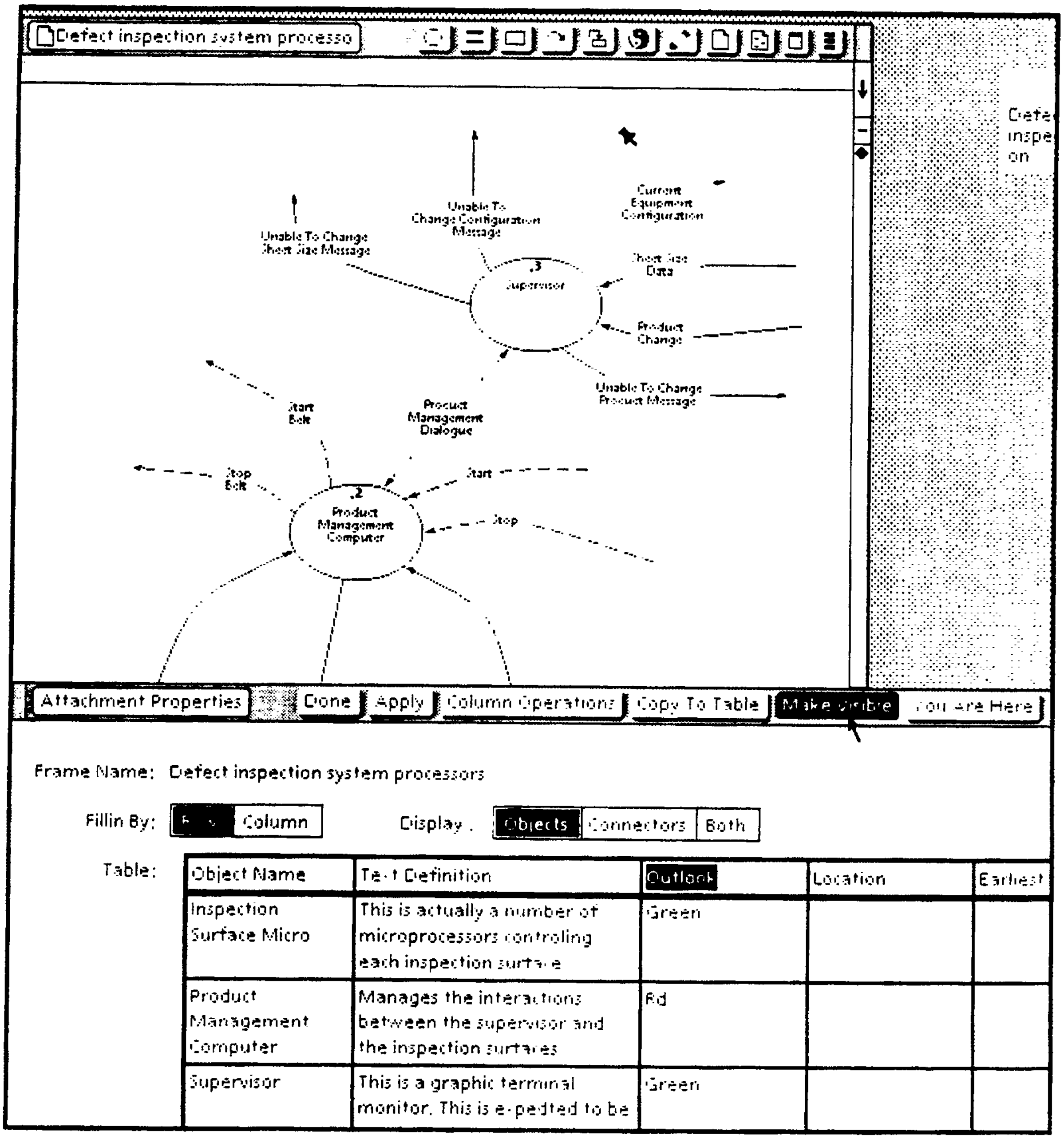
Defect inspection system processo
Unable To Change Configuration Message
Current Equipment Configuration
Unable To Change Sheet Size Message
Supervisor
Product Change
Unable To Change Product Message
Start Belt
Product Management Dialogue
Stop Belt
Start
Product Management Computer
Stop
Attachment Properties
Done
Apply
Column Operations
Copy To Table
Make visible
You Are Here
Frame Name: Defect inspection system processors
Fillin By: Column
Display. Objects Connectors Both
Table:
Object Name
Text Definition
Outlook
Location
Earliest
Inspection Surface Micro
This is actually a number of microprocessors controling each inspection surface
Green
Product Management Computer
Manages the interactions between the supervisor and the inspection surfaces
Red
Supervisor
This is a graphic terminal monitor. This is expected to be
Green

FIG. 34

*FIG. 35*

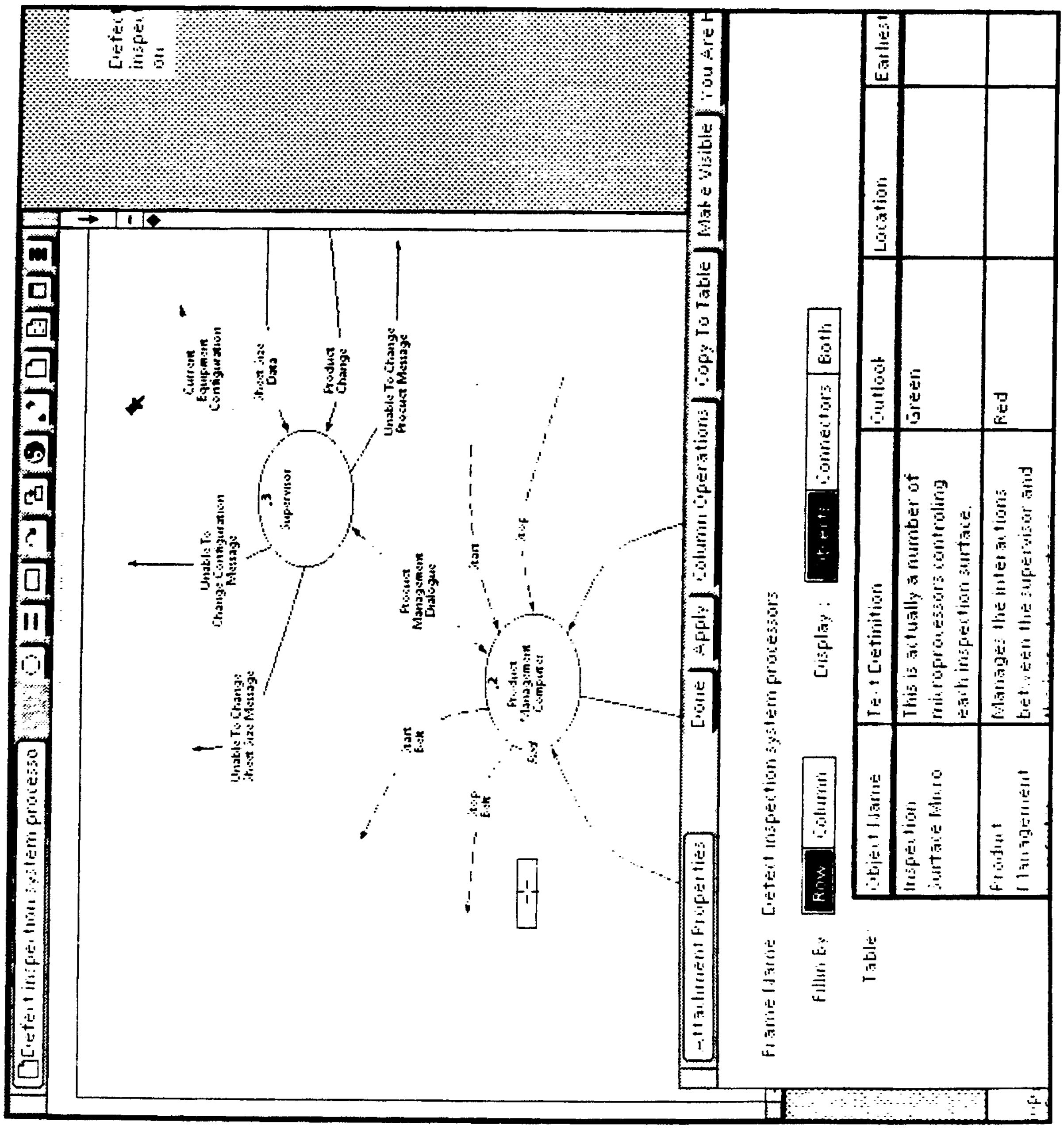
Supervisor
Product Management Computer
Product Management Dialogues
Current Equipment Configuration
Product Change
Unable To Change Product Message
Unable To Change Configuration Message
Unable To Change Sheet Size Message
Attachment Properties
Done
Apply
Column Operations
Copy To Table
Make Visible
Frame Name Defect inspection system processors
Fill In By
Row
Column
Display :
Connectors
Both
Table
Object Name
Text Definition
Outlook
Location
Earliest
Inspection Surface Micro
This is actually a number of microprocessors controlling each inspection surface.
Green
Product Management
Manages the interactions between the supervisor and
Red

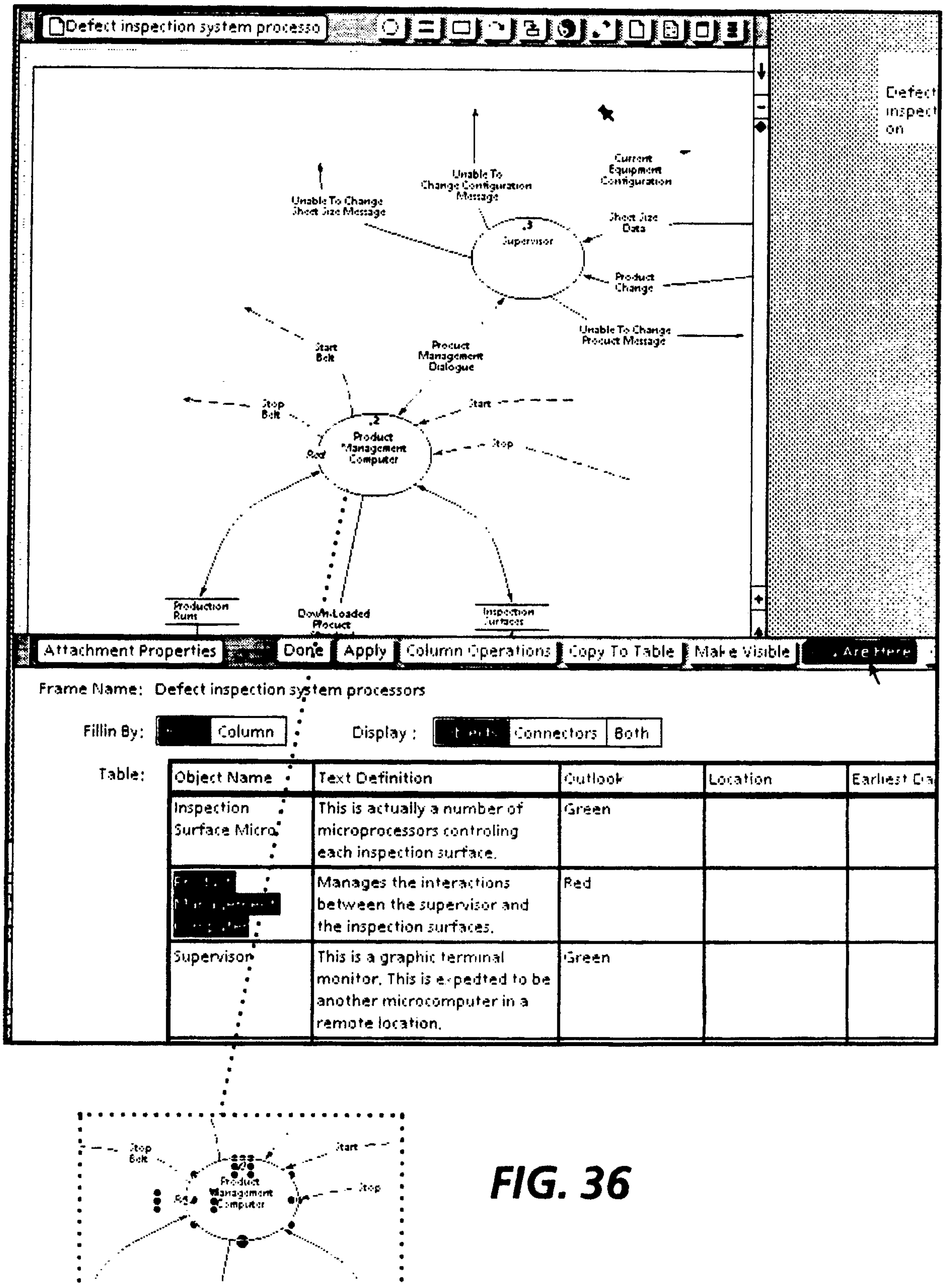
Defect inspection system processo
Unable To Change Sheet Size Message
Unable To Change Configuration Message
Current Equipment Configuration
Sheet Size Data
3 Supervisor
Product Change
Unable To Change Product Message
Start Belt
Product Management Dialogue
Stop Belt
Start
2 Product Management Computer
Red
Stop
Production Runs
Down-Loaded Product
Inspection Surfaces
Attachment Properties
Done
Apply
Column Operations
Copy To Table
Make Visible
Are Here
Frame Name: Defect inspection system processors
Fillin By:
Column
Display :
Connectors
Both
Table:
Object Name
Text Definition
Outlook
Location
Inspection Surface Micro
This is actually a number of microprocessors controling each inspection surface.
Green
Manages the interactions between the supervisor and the inspection surfaces.
Red
Supervisor
This is a graphic terminal monitor. This is expedted to be another microcomputer in a remote location.
Green
Stop Belt
Start
Product Management Computer
Stop

*FIG. 36*

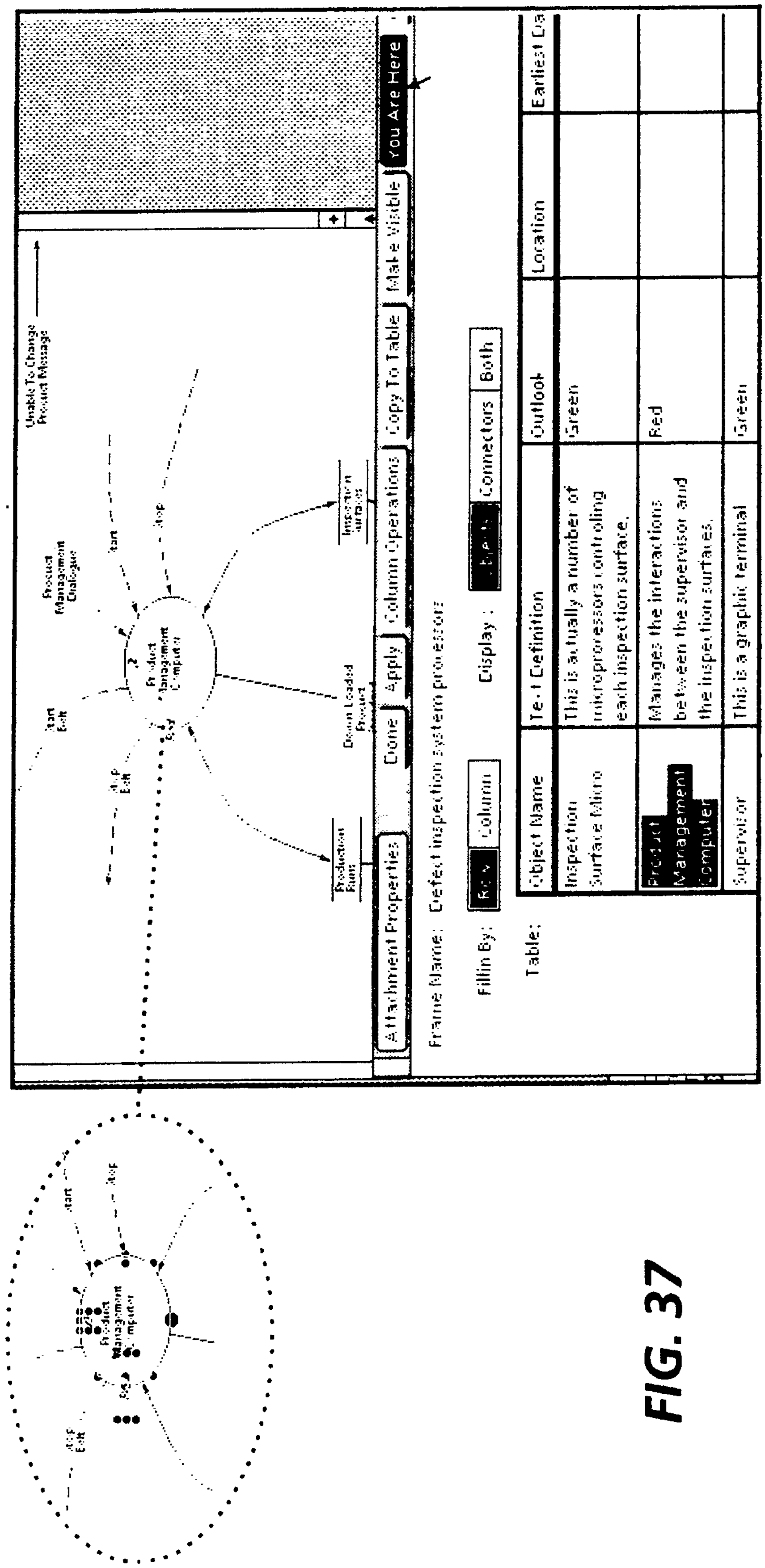
Unable To Change Product Message
Product Management Dialogue
Start
Stop
Start Edit
Stop Edit
Product Management Computer
Inspection Surfaces
Down Loaded Product
Production Runs
Attachment Properties
Done
Apply
Column Operations
Copy To Table
Make Visible
You Are Here
Frame Name: Defect inspection system processors
Fillin By: Row Column
Display: Connectors Both
Table:
Object Name
Text Definition
Outlook
Location
Inspection Surface Micro
This is actually a number of microprocessors controling each inspection surface.
Green
Product Management Computer
Manages the interactions between the supervisor and the inspection surfaces.
Red
Supervisor
This is a graphic terminal
Green

FIG. 37